# EUROPÄISCHE PATENTSCHRIFT

(11) **EP 1 941 263 B1**
(45) Veröffentlichungstag und Bekanntmachung des Hinweises auf die Patenterteilung: **21.12.2016**
(21) Anmeldenummer: 06807388.1
(22) Anmeldetag: 18.10.2006
(51) Int. Cl.: G01N 21/95

(54) **OPTISCHE SEMIQUANTITATIVE 100%-BEFÜLLUNGSKONTROLLE VON PHARMAZEUTISCHEN KAPSELN AUF KAPSELFÜLLMASCHINEN**
OPTICAL SEMI-QUANTITATIVE 100 % FILLING CHECK OF PHARMACEUTICAL CAPSULES ON CAPSULE FILLING MACHINES
CONTROLE OPTIQUE SEMI-QUANTITATIF DE REMPLISSAGE A 100 % DE CAPSULES PHARMACEUTIQUES SUR DES MACHINES DE REMPLISSAGE DE CAPSULES

(30) Priorität: 19.10.2005 DE 102005049958
(43) Veröffentlichungstag der Anmeldung: 09.07.2008
(73) Patentinhaber: Boehringer Ingelheim International GmbH, 55216 Ingelheim am Rhein (DE); Boehringer Ingelheim Pharma GmbH & Co. KG, 55216 Ingelheim (DE)
(72) Erfinder: JULIUS, Klaus, 51709 Marienheide (DE); STOECKEL, Peter, 55437 Appenheim (DE)
(74) Vertreter: Simon, Elke Anna Maria
(86) Internationale Anmeldenummer: PCT/EP2006/067557
(87) Internationale Veröffentlichungsnummer: WO 2007/045670

(56) Entgegenhaltungen:
- EP-A2- 0 859 227
- WO-A2-2004/004626
- DE-A1- 2 910 494
- US-A- 3 969 227

## Beschreibung

Die vorliegende Erfindung betrifft ein Verfahren zur Überwachung der Befüllung einer Kapsel mit einem Medikament, sowie ein entsprechendes Befüllungsverfahren. Pulverförmige Peroralia und Inhalativa werden in der pharmazeutischen Industrie in Kapseln, beispielsweise in Hartgelatinekapseln, abgefüllt. Zur Befüllung der Kapseln sind unterschiedliche Verfahren und Maschinen bekannt. Diese ähneln sich darin, dass sie durchweg volumetrisch arbeiten. Ein vorgegebenes Dosiervolumen wird möglichst homogen mit dem Medikament, das meist in Pulverform vorliegt, gefüllt. Dabei bildet sich ein lose zusammenbackender Pulverzylinder. Dieser Zylinder wird anschließend aus der Dosierkammer gedrückt und fällt in das Kapselunterteil. Das Kapselunterteil wird nach der Befüllung durch Aufstecken der Kappe verschlossen.

Die bekannten Kapselfüllmaschinen arbeiten mit hohem Durchsatz, so dass bis zu 250000 Kapseln pro Stunde mit Pulver befüllt werden. Die zur Qualitätssicherung verwendeten Maßnahmen umfassen eine stichprobenweise Kontrolle der Kapseln in Hinblick auf die korrekte Füllmenge. Die Qualität der Kapseln wird auf der Grundlage der Stichproben und entsprechender statistischer Berechnung beurteilt. Meist erfolgt die Stichprobenmessung durch Wägung. Ein derartiges Verfahren ist insbesondere bei kleinen Füllmengen aufwendig. In diesem Fall ist nämlich zusätzlich eine Tarawägung der leeren Kapsel erforderlich. Außerdem findet dabei keine 100%-ige Überprüfung der Kapseln statt. Deshalb muß bei der stichprobenartigen Überprüfung damit gerechnet werden, dass bei jeder als eigentlich spezifikationskonform befundenen Charge befüllter Kapseln je nach Strenge der statistischen Stichprobenkriterien eine mehr oder minder große Anzahl von Kapseln vorhanden ist, die eindeutig nicht den Qualitätsspezifikationen entspricht. Dies kann im Einzelfall bei der Verabreichung des Medikaments ein Gesundheitsrisiko darstellen und sollte daher vermieden werden. Es besteht daher grundsätzlich Bedarf für eine qualitätssichernde Inspektion der Kapseln, die einerseits eine 100%-ige Überprüfung aller Kapseln ermöglicht und die andererseits möglichst so durchgeführt werden kann, dass dadurch der Befüllvorgang bzw. der Herstellungsvorgang der Kapseln durch die Inspektion nicht verlangsamt wird. Beispielsweise ist aus der US 3,969,227 ein Verfahren bzw. eine Vorrichtung bekannt, bei dem bzw. bei der Kapseln mit zwei Lichtstrahlen durchleuchtet werden. Das Füllgut in der Kapsel unterbricht die Lichtstrahlen. Deshalb kann anhand der Intensitätsverteilung in den transmittierten Strahlen auf den Pulverfüllstand in der Kapsel geschlossen werden. Dieses Verfahren ist insofern nachteilig, als es nur eine rein qualitative Aussage darüber zu treffen vermag, ob die Kapsel gefüllt ist oder nicht. Insbesondere bei kleiner Füllmenge in der Kapsel ist die Präzision des Verfahrens unzureichend.

Aus der Veröffentlichung "Füllstandsmessung mit Ultraschall von pelletgefüllten Hartgelatinekapseln" von H. Krasowski, W. Pfeifer, G. Marquardt und U. Klaß (Pharm. Ind. 57, Nr. 4, Seiten 328 - 332 [1995]) ist ein Verfahren zur Ermittlung des Füllstandes von Kapseln bekannt, wobei durch reine Laufzeitmessung von Ultraschall die Füllhöhe einer Kapsel ermittelt wird. Dieses Verfahren eignet sich lediglich für Befüllungen, die sich homogen im Kapselunterteil verteilen. Bei Kapseln, die im Vergleich zur Befüllung groß sind, kann das Verfahren den Grad der Befüllung nicht ausreichend präzise ermitteln.

Die Veröffentlichung "Automatische Füllkontrolle für die Abfüllung von Pellets in Hartgelatinekapseln" von W. Pfeifer, G. Marquardt und M. Rommel (Pharm. Ind. 49, Nr. 3, Seiten 291 - 297 [1987]) beschreibt ein Verfahren, bei dem die Oberfläche der Befüllung eines Kapselunterteils mit einem Lichtstrahl angestrahlt und darauf ein Lichtfleck erzeugt wird. Aufgrund der mit der Höhe der Befüllung variierenden Lichtfleckgröße wird der Füllstand der Kapsel bestimmt. Es handelt sich um das sogenannte Berghoff-System. In einem weiteren darin diskutierten Verfahren werden die Füllstände mehrerer Kapselunterteile mit einem Taststift abgetastet. Ein zu tiefes Eintauchen eines Stiftes führt zu einer Unterbrechung eines Lichtstrahls. Dieses Verfahren ist sehr ungenau. Zudem eignet es sich wie das vorgenannte Verfahren lediglich für Befüllungen, die sich homogen im Kapselunterteil verteilen. Letzteres Verfahren eignet sich nur für die Überprüfung stillstehender Kapseln. Dazu muss technisch aufwendig die Kapsel nach der Befüllung zum Stillstand gebracht werden und die Herstellungszeit verlängert sich beträchtlich.

Die WO 2004/004626 A2 zeigt eine Vorrichtung bzw. ein Verfahren, in welchem der Füllstand von pharmazeutischen Kapseln optoelektronisch in einer Kapselfüllmaschine geprüft wird. Hierzu werden die Kapseln einzeln über einen Beschickungsweg zu einer Prüfstation geleitet, wo sie in ein elektromagnetisches Strahlungsfeld gelangen, das durch kohärentes, polarisiertes Licht erzeugt wird. Die Vorrichtung beinhaltet einen optischen Sensor zum Auffangen des Lichts auf der anderen Seite der Kapsel. Der Sensor generiert ein Signal, das der gemessenen Höhe des Füllmaterials in der Kapsel entspricht, und dieses Signal wird mit einem vorbestimmten Referenzwert verglichen. Kapseln, für die das Signal nicht konform mit dem Referenzwert ist, werden aussortiert.

DE 29 10 494 A1 offenbart ein Verfahren gemäß der Präambel des Anspruchs 1.

Es ist daher Aufgabe der vorliegenden Erfindung, ein Verfahren zur Überwachung der Befüllung einer Kapsel mit einem pulverförmigen Medikament sowie ein derartiges Verfahren in Kombination mit einem Befüllungsvorgang bereitzustellen, bei dem im Vergleich zum Stand der Technik eine effektivere und schnellere Kontrolle der Befüllung erreicht wird. Eine im Sinne der vorgenannten Aufgabe vorteilhafte Vorrichtung ergibt sich aus dem nebengeordneten Anspruch, Vorteilhafte Ausgestaltungen sind jeweils Gegenstand der nebengeordneten Ansprüche.

Das erfindungsgemäße Verfahren dient zur Überwachung der Befüllung einer Kapsel mit einem Medikament. Beispielsweise handelt es sich um eine Hartgelatinekapsel. Diese Kapseln bestehen beispielsweise aus einem Unterteil und einer Kappe. Nachdem wenigstens ein Teil der Kapsel mit einer vorgegebenen Füllmasse von vorgegebener geschlossener Kontur aus dem Medikament, insbesondere pulverförmigen Medikament, befüllt wurde, wird erfindungsgemäß in einem Aufzeichnungsschritt wenigstens die im Teil der Kapsel nach der Befüllung befindliche Füllmasse bildgebend, insbesondere digitalbildgebend, aufgezeichnet und in einem nachfolgenden Auswertungsschritt wird anhand des im Aufzeichnungsschritt aufgezeichneten Bildes eine Bewertung der Befüllung vorgenommen.

Die Kapsel, die beispielsweise in einer Vorverschlussposition zur Befüllung angeliefert wird, wird in einer Ausgestaltung vor dem erfindungsgemäßen Überwachungsverfahren durch Unterdruck in zwei Teile getrennt. Das Kapselunterteil, als Beispiel für einen zu befüllenden Teil einer Kapsel, wird mit einer vorgegebenen Füllmasse von vorgegebener, geschlossener Kontur befüllt.

Die Füllmasse ergibt sich bei einem zuvor pulverförmige Medikament aus dem Dosiervolumen und der Dichte des Medikaments. Bei dem Medikament kann es sich um Peroralia oder Inhalativa handeln. Das Pulver wird in der Dosierkammer leicht verfestigt. Der Pulverformling übersteht den freien Fall aus dem Dosierer in das Kapselunterteil in der Regel unbeschadet. Die Form bzw. die scharfe Kontur des Pulverformlings bleiben dabei erhalten. In vielen Fällen sind das Dosiervolumen und damit die darin formgepresste Füllmasse zylinderförmig.

In Aufzeichnungsschritt des erfindungsgemäßen Verfahrens wird wenigstens die im Teil der Kapsel nach der Befüllung befindliche Füllmasse bildgebend aufgezeichnet. Beispielsweise wird mit einer elektronischen Kamera und einer geeigneten Optik in das offene Kapselteil hineingeblickt und ein Bild aufgenommen. Beispielsweise wird das Bild unmittelbar durch eine mit einem digitalen Bildwandler ausgestattete Kamera erfasst oder ein elektronisches Bild einer Kamera durch einen zusätzlichen Wandler digitalisiert. Das Bild kann in einer Ausgestaltung als Graustufenbild vorliegen. Zur Aufzeichnung des Bildes sind in einer Ausgestaltung Mittel zur Beleuchtung des Innern des Kapselteils vorgesehen. Beispielsweise wird das Innere der Kapsel für die Aufzeichnung von oben beleuchtet. So kann ein halbdurchlässiger Spiegel über dem Kapselteil angeordnet sein, um mittels dieses Spiegels gleichzeitig die Beleuchtung und die Aufzeichnung zur ermöglichen. Die Erfassung der Füllmasse kann beispielsweise dann besonders leicht erfolgen, wenn aufgrund einer Senke im Kapselteil, die Füllmasse sich regelmäßig im Wesentlichen nach der Befüllung in dieser Senke und somit immer wieder an derselben Stelle anordnet.

In dem Auswertungsschritt wird aus der Aufzeichnung der Zustand der im Kapselteil befindlichen Füllmasse ermittelt. Beispielsweise wird die Anzahl von Bruchstücken im aufgezeichneten Bild oder der Grad der Zerklüftung der Füllmasse ermittelt. Es wird eine Bewertung der Befüllung vorgenommen, um für die einzelne Befüllung festzustellen, ob eine Fehlbefüllung vorliegt oder nicht. Beispielsweise kann eine Fehlbefüllung vorliegen, da es bei der Abgabe der Füllmasse aus dem Dosiervolumen in den Kapselteil zu einer unvollständigen Ablösung der Füllmasse aus dem Dosiervolumen gekommen ist. Ferner können beim Transport der Füllmasse in den Kapselteil Teile der Füllmasse ausgebrochen sein, was zu einer nicht vollständigen Befüllung geführt hat. Ferner kann das Dosiervolumen noch Reste enthalten haben, was zu einer Überfüllung führen kann. Das erfindungsgemäße Überwachungsverfahren ermöglicht eine gegenüber dem Stand der Technik vergleichsweise schnelle und zudem präzisere qualitative Beurteilung einer Kapselfüllung. Das erfindungsgemäße Verfahren eignet sich insbesondere für Kapseln, bei denen die Füllmasse nur einen kleinen Anteil des Volumens der Kapsel ausmacht. Dies ist bei Peroralia selten und bei Inhalativa häufig der Fall.

Bei einer vorteilhaften Ausgestaltung des erfindungsgemäßen Verfahrens wird im Auswertungsschritt aus der bildgebenden Aufzeichnung die Kontur, d.h., die sich aus der jeweiligen Betrachtung ergebende Umfangslinie der im Teil der Kapsel befindlichen Füllmasse, ermittelt. Nachfolgend wird die Kontur analysiert, um eine Bewertung der Befüllung im Vergleich zur vorgegebenen geschlossenen Kontur der Formmasse bzw. des Dosiervolumens vorzunehmen. Weichen beide Konturen wesentlich voneinander ab und/oder ist die Kontur im Vergleich sehr stark zerklüftet, ist die Befüllung unter Veränderung der äußeren Kontur der Füllmasse erfolgt, und es liegt eine Fehlbefüllung vor. Somit erlaubt die Konturabweichung, beispielsweise bezogen auf ihren gesamten Verlauf und/oder auf ihre charakterisierenden Eigenschaften, wie Stetigkeit, d.h. Glätte Rückschlüsse auf eine nicht ausreichende oder übermäßige Befüllung des Kapselteils und damit der Kapsel, d.h., letztlich wird eine qualitative und gegebenenfalls basierend auf dem Maß der Abweichung eine quantitative Beurteilung der Befüllung ermöglicht. Gemäß einer Ausgestaltung, bei der die Füllmasse nur eine kleine Anzahl von reproduzierbaren Stellungen im Kapselteil einnimmt und/oder eine hochsymmetrische Form (beispielsweise Kugelform) aufweist, reicht der Vergleich der absoluten Verläufe der Kontur an sich aus, um eine Beurteilung in qualitativer und gegebenenfalls quantitativer Hinsicht der Befüllung vorzunehmen. Das erfindungsgemäße Verfahren mit konturbezogener Bewertung der Füllmasse ermöglicht eine besonders schnelle und effektive Bewertung der Befüllung von Kapseln, insbesondere in solchen Fällen, bei denen die Füllmasse nur einen kleinen Anteil des Volumens der Kapsel ausmacht.

Gemäß einer vorteilhaften Ausführungsform des erfindungsgemäßen Verfahrens erfolgt die Aufzeichnung mit sichtbarem Licht, indem die Füllmasse mit Licht des sichtbaren Frequenzbereichs erfasst, bzw. der Kapselteil durchleuchtet wird. Dadurch kann das Verfahren vergleichsweise einfach und preiswert durchgeführt werden. Die zur Durchführung des Verfahrens benötigten Bauelemente sind störunanfällig und können aufgrund ihrer geringen Ausmaße vergleichsweise leicht in bestehende Befüllungsanlagen für pharmazeutische Kapseln integriert werden.

Bei einer vorteilhaften Ausführungsform des Verfahrens zur Überwachung der Befüllung einer Kapsel mit einem Medikament erfolgt die bildgebende Aufzeichnung durch eine den Teil der Kapsel transmittierende Aufzeichnung. Beispielsweise wird die Kapsel von unten her mit intensivem Licht durchleuchtet, um ein Bild aufzuzeichnen. Die im Bild erscheinende Kontur des Füllguts wird so erhalten. Die Auswahl der Lichtintensität und ihrer spektralen Verteilung erfolgt in Abhängigkeit von den optischen Eigenschaften des zu durchstrahlenden Kapselmaterials und den sonstigen Belichtungserfordernissen. In Abhängigkeit von der Leistungsfähigkeit der bildgebenden Aufzeichnung kann die gesamte Kapsel, d.h., die mit der Kapseloberseite nach der Befüllung bereits wieder verschlossene Kapsel transmittierend untersucht werden. Beispielsweise erfolgt dies mit Ultraschall oder mit Licht hoher Intensität und/oder bei hoher Transparenz des Kapselmaterials. Durch die transmittierende Aufzeichnung wird erreicht, dass die Kontur der Füllmasse aufgrund des hohen Kontrastes zwischen dem Bereich, der durch die Füllmasse abgeschattet wird und dem verbleibenden Bereich vergleichsweise leicht ermittelt werden kann und zusätzliche kontraststeigernde, bildbearbeitende Maßnahmen entfallen können.

Ferner wird durch die transmittierende Aufzeichnung erreicht, dass der für die Durchführung des Verfahrens notwendige vorrichtungstechnische Aufwand vergleichsweise gering ausfällt. Aufgrund der im Allgemeinen geringen Ausmaße der Kapsel sind diese in der Maschine schwer zugänglich. Eine gleichzeitige optische Beleuchtung des Innern und optische Erfassung über die Öffnung des Kapselunterteils ist vergleichsweise kompliziert.

Bei einer weiteren vorteilhaften Ausführungsform des erfindungsgemäßen Verfahrens zur Überwachung der Befüllung wird im Aufzeichnungsschritt bei der bildgebenden Aufzeichnung das Innere des Teils der Kapsel vollständig erfasst. Dadurch wird erreicht, dass auch von der Füllmasse abgelöste Teile oder auch sonstige in das Innere des Kapselteils bzw. der Kapsel gelangte Teile bei der Untersuchung ermittelt werden und dies bei der Beurteilung der Befüllung in qualitativer und gegebenenfalls quantitativer Hinsicht in einer Ausführungsform Berücksichtigung findet.

Eine weitere vorteilhafte Ausführungsform sieht vor, dass während des Aufzeichnungsschritts wenigstens der befüllte Teil der Kapsel bewegt wird. Dadurch kann das Verfahren vorteilhaft während eines Transports der Kapsel bzw. des Kapselteils beispielsweise bei der Befüllung eingesetzt werden, ohne dass diese bzw. dieser den Transport unterbrechend und damit die Produktivität nachteilig beeinflussend angehalten werden muss.

Gemäß einer weiteren vorteilhaften Ausführungsform erfolgt im Aufzeichnungsschritt die Speicherung der Ansicht von oben in das Innere des Teils der Kapsel. Es hat sich gezeigt, dass bei einer unter dem Kapselteil angeordneten Aufzeichnungseinrichtung es dazu kommen kann, dass diese, beispielsweise deren zugehörige Optik, wie Linsen und Spiegel, leicht einstauben kann. Dies beeinträchtigt nachteilig eine Erfassung der Füllmasse, bzw. kann zu Fehlbewertungen führen. D.h. durch die zuvor beschriebene Aufzeichnungsrichtung wird die Vorrichtung weniger störanfällig und ist universeller bei unterschiedlichen Kapselmaterialien anwendbar.

Eine weitere vorteilhafte Ausführungsform sieht vor, dass im Auswertungsschritt die aufgezeichnete Konturlinie auf konkave Bereiche untersucht wird. Es hat sich gezeigt, dass die Untersuchung auf konkave Bereiche in der Konturlinie besonders zuverlässig Auskunft darüber gibt, wie unstetig die Kontur der Füllmasse geworden ist, was letztlich auf Bruchstellen in der Füllmasse und damit auf eine mangelhafte Befüllung zurückzuführen ist.

Im Auswertungsschritt einer Ausgestaltung des erfindungsgemäßen Verfahrens wird die aufgezeichnete Konturlinie durch konvexe Anpassung angenähert und die Länge der aufgezeichneten Konturlinie mit der Länge der angenäherten Konturlinie verglichen. Es hat sich gezeigt, dass durch den Konturlängenvergleich zuverlässige Aussagen über den Zustand der Befüllung getroffen werden können. Beispielsweise wird die Pixellänge der aufgezeichneten und der digital ermittelten Konturlinie (Anzahl Pixel entlang der Konturlinie) ermittelt und mit der Länge einer Kurve verglichen, die durch konvexe Einhüllung der ermittelten Kurve erhalten wird. Der Quotient aus der einhüllenden Kurve, d.h. der angenäherten Konturlinie durch die tatsächliche Konturlinie liefert einen so genannten Konvexitätsparameter alpha. Je kleiner dieser ausfällt, desto mehr konkave und unstetige Bereiche liegen im Umfang der Füllmasse vor, was letztlich auf Bruchstellen in der Füllmasse und damit auf eine mangelhafte Befüllung zurückzuführen ist.

Der Grenzwert für den Konvexitätsparameter wird vom Fachmann in der Praxis mit Hilfe einer möglichst umfangreichen Sammlung von Testbildern bestimmt. Diese Bilder stammen von Kapseln, die über Tara- und Bruttowaage gelaufen sind. Deshalb ist die Masse des Pulvers, das in den Bildern zu sehen ist, auf das Mikrogramm genau bekannt. Basierend auf diesen Bildern wird die Grenze für den Konvexitätsparameter alpha so festgelegt, dass mit hoher Trennschärfe die schlecht befüllten Kapseln von den korrekt befüllten unterschieden werden.

Bei einer weiteren vorteilhaften Ausführungsform ist die vorgegebene Kontur durch eine zylinderförmige Füllmasse vorgegeben. Es hat sich gezeigt, dass die Zylinderform aufgrund ihrer starken konvexen Krümmungsverhältnisse sich besonders eignet, eine besonders sichere Beurteilung der Befüllung in qualitativer und quantitativer Hinsicht vorzunehmen. Aufgrund der starken konvexen Krümmungen der Füllmassenoberfläche sind durch Bruchstellen hervorgerufene unstetige Übergänge bzw. konkave Übergänge in der aufgezeichneten Konturlinie leicht detektierbar. Das Verfahren arbeitet dadurch sehr zuverlässig.

Im Auswertungsschritt einer weiteren vorteilhaften Ausführungsform wird einerseits der Kontrast gesteigert, andererseits werden Grau- bzw. Farbabstufungen des Bildes verringert. Letztlich führt dies zu einer erleichterten Erkennung der Konturlinie im Bild.

Gemäß einer weiteren vorteilhaften Ausführungsform wird beim erfindungsgemäßen Verfahren im Auswertungsschritt das Bild durch Wahl eines geeigneten Schwellenwertes für die Intensität in ein binäres Bild umgewandelt. Der Schwellenwert wird beispielsweise anhand der Belichtungsbedingungen und der Belichtungsempfindlichkeit des Aufzeichnungsgerätes vorgegeben und vom Fachmann eingestellt. Durch die Umwandlung in ein rein binäres Bild kann der Datenumfang erheblich reduziert werden und die digitale Bildanalyse in Bezug auf die zu ermittelnde Konturlinie drastisch beschleunigt werden.

Bei einer weiteren Ausgestaltung des erfindungsgemäßen Verfahrens wird im Auswertungsschritt das Bild einer morphologischen Kantenerkennung unterzogen, um die Konturlinie zu ermitteln.

Eine weitere Ausführungsform sieht vor, dass im Auswertungsschritt das Bild invertiert wird, um die Auswertung zu vereinfachen.

Die Erfindung betrifft ferner ein Verfahren zur maschinellen, fortlaufenden Befüllung von Kapseln mit einem Medikament, wobei jeweils wenigstens ein Teil der Kapsel mit einer vorgegebenen Füllmasse von vorgegebener Kontur aus dem Medikament befüllt wird und im Weiteren eine Überwachung der Befüllung gemäß einer der zuvor beschriebenen Ausführungsformen erfolgt. Bei der maschinellen, fortlaufenden Befüllung erfolgt diese nach dem sogenannten "Inline"-Verfahren, das heißt die Befüllung erfolgt fließbandartig. Das Überwachungsverfahren in den zuvor beschriebenen Ausführungsformen ermöglicht aufgrund seiner vergleichsweise hohen Geschwindigkeit, mit der die Erfassung und Analyse der Füllmasse erfolgt, eine vollständige, zur Befüllung synchrone Überwachung der Kapseln. Beispielsweise arbeiten derzeitige Befüllungsverfahren mit einem Ausstoß von 80.000 Kapseln. Da das erfindungsgemäße Überwachungsverfahren für die Überwachung einer einzelnen Kapsel einen Zeitraum von 45 ms deutlich unterschreitet, kann das erfindungsgemäße Überwachungsverfahren leicht mit den bekannten Befüllungsverfahren kombiniert werden, um eine vollständige und effektive Qualitätsüberwachung zu erreichen. Es handelt sich bei dem Befüllungsverfahren beispielsweise um ein sogenanntes Stopfverfahren, bei dem das Dosiervolumen durch Matrizenscheiben mit entsprechenden Bohrungen versehen ist. Anhand des Ergebnisses der jeweiligen Überwachung erfolgt gegebenenfalls die Aussortierung der betreffenden Kapsel. Beispielsweise wird die Kapsel bzw. das befüllte Kapselunterteil beim Weitertransport durch eine Luftdüse aus aus dem Strom der übrigen Kapseln gestoßen. In einer Ausführungsform erfolgt die Aussortierung der als falsch befüllt erachteten Kapsel um etwa 450 ms verzögert gegenüber der Befüllung. Beispielsweise wird das Kapselunterteil in der Zwischenzeit vollständig verschlossen oder zur Verpackung weitertransportiert. Dadurch steht ausreichend Zeit für eine mögliche verzögerte Auswertung zur Verfügung. Gemäß einer weiteren vorteilhaften Ausführungsform des Verfahrens zur maschinellen, fortlaufenden Befüllung umfasst die Befüllung ein Aufschlagen der Füllmasse auf wenigstens einen Teil der Kapsel. Es hat sich gezeigt, dass ein Aufschlagen der Füllmasse in dem betreffenden Kapselteil sehr geeignet ist, eine Inhomogentität der Füllmasse, die zu einer Fehlbefüllung führt, und die mit einer Instabilität der Füllmasse einhergeht durch Ausbrechen von Bestandteilen der Füllmasse festzustellen und dass somit eine Fehlbefüllung zuverlässig detektiert werden kann. Das Aufschlagen nach freiem Fall reicht aus.

Bei einer weiteren vorteilhaften Ausführungsform ist das Medikament pulverförmig. Es hat sich gezeigt, dass sich die Kombination aus pulverförmigem Medikament und Aufschlagen der daraus bestehenden Füllmasse besonders eignet, eine unzureichende Befüllung zuverlässig zu detektieren. Bei einer Fallhöhe von ca. 14 mm und einem Sollgewicht der Füllmasse von 5,5 mg kommt es bei einer pulverförmigen Zusammensetzung der Füllmasse und einer aufgrund von Fehlbefüllungen inhomogenen Zusammensetzungen zuverlässig zu einem Ausbrechen von Bestandteilen der Füllmasse, die aufgrund der stark konturverändernden Wirkung auf die Füllmasse und gegebenenfalls aufgrund des Vorliegens von weiteren Bruchstücken der Füllmasse in der Kapsel leicht und zuverlässig zu detektieren sind.

Bei einer weiteren vorteilhaften Ausführungsform erfolgt die Befüllung nach dem Stechheberprinzip. Das Stechheberprinzip wird nachfolgend an einem Beispiel beschrieben. Während beim Stopfverfahren das Dosiervolumen durch Matrizenscheiben mit entsprechenden Bohrungen gebildet wird, wird im Stechheber das Dosiervolumen durch definiertes Zurückziehen eines Stahlstößels in einer Stahlhülse realisiert. Anschließend taucht der Stechheber in ein möglichst homogenes aus dem Medikament bestehendes Pulverbett bis auf eine bestimmte Tiefe ein. Dabei wird Pulver in das unten offene, zylindrische Dosiervolumen gedrückt, bis das Pulver das Volumen vollständig ausfüllt und so eine zylindrische Füllmasse bildet. Nun wird der Stechheber aus dem Pulverbett herausgehoben. Er durchläuft eine Absaugstrecke, in der er von äußerlich anhaftendem Pulver befreit wird. Gleichzeitig schleift die offene Unterseite des Stechhebers über eine sorgfältig einjustierte plane Fläche. Auf diese Weise wird das überschüssige Pulver von der Unterseite ebenfalls entfernt und die Unterseite des Pulverzylinders im Dosiervolumen glatt abgezogen. Der Stechheber läuft aus der Absaugstrecke heraus und erreicht wenig später eine Position direkt über einem offenen Kapselunterteil. Der Stößel des Stechhebers drückt nun den Pulverzylinder, der ein genau definiertes Volumen besitzt, aus der Dosierkammer. Durch eine ruckartige Auf- und Abwärtsbewegung des Stößels wird erreicht, dass sich der Pulverzylinder von der Stößelstirnfläche löst. Die Distanz von beispielsweise etwa 14 mm bis zum Boden des Kapselunterteils legt die zylinderförmige Füllmasse im freien Fall zurück. Es hat sich gezeigt, dass das erfindungsgemäße Überwachungsverfahren sich vorteilhaft mit dem Stechheberverfahren kombinieren lässt.

Die Erfindung betrifft ferner die Durchführung der vorhergehend beschriebenen Verfahren mit Mitteln zur digitalbildgebenden Aufzeichnung und digitalen Bildanalyse. Die Mittel zur digitalen Datenverarbeitung bei der Bildanalyse und Aufzeichnung ermöglichen vorteilhaft eine schnelle und damit 100%-ige Überwachung der befüllten Kapseln bzw. Kapselteile.

In einer vorteilhaften Ausführungsform weisen die Mittel zur digitalbildgebenden Aufzeichnung wenigstens ein CCD (Charged Coupled Device) oder CMOS-Bildwandler auf, um eine besonders schnelle Erfassung und vergleichsweise kleine, somit raumsparende Kamera zu ermöglichen.

Bei einer weiteren vorteilhaften Ausführungsform umfassen die Mittel zur bildgebenden Aufzeichnung wenigstens eine LED oder einen Laser. Dadurch kann ein sehr intensives Licht zur Durchleuchtung des Kapselteils bzw. der Kapsel erreicht werden. Dies hat den Vorteil, dass trotz einer für eine gewisse Schärfentiefe erforderliche Abblendung der bildgebenden Optik so kurze Belichtungszeiten eingestellt werden können, dass das Signal-Rausch-Verhalten beispielsweise im CCD ausreichend ist. Andererseits kann die Intensität der Durchleuchtung durch die Verwendung eines LEDs bzw. Lasers so gesteigert werden, dass der befüllte Kapselteil in der Transportbewegung von beispielsweise bis zu 1,30 m/s bildgebend erfasst wird. Die Bewegungsunschärfen fallen beispielsweise bei einer Belichtungszeit von 50 µs so gering aus, dass sie bei der Auswertung vernachlässigbar sind. Die Kapsel muss daher nicht mechanisch aufwendig zur bildgebenden Aufzeichnung beim Transport abgebremst oder angehalten werden. Ferner kann eine LED kurzzeitig mit Stromstärken belastet werden, die weit über dem zulässigen Dauerstrom liegen.

Bei einer weiteren Ausführungsform umfassen die Mittel zur digitalen Bildanalyse einen Rechner.

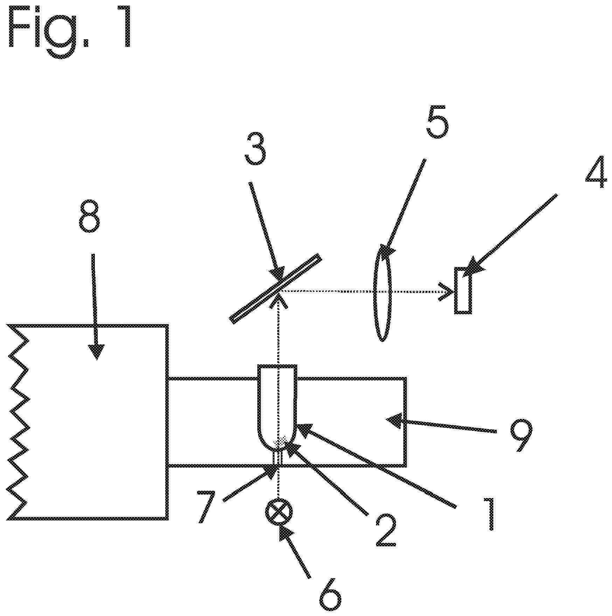

Nachfolgend wird eine Ausführungsform des erfindungsgemäßen Überwachungsverfahrens, die zusammen mit einem Befüllungsverfahren, das nach dem Stechheberprinzip arbeitet, verwendet wird, beschrieben. Die zugehörige Vorrichtung wird schematisch in Figur 1 ausschnittsweise dargestellt.

Die Kapselunterteile 1 stecken jeweils in Edelstahlmatrizen, die ihrerseits von Schlitten 9 eines Transportsystems 8 der Befüllungsanlage gehalten werden. Diese Schlitten 9 bewegen sich kurvengesteuert auf kreisähnlichen Bahnen in einer horizontalen Ebene unterhalb von den Stechhebern (nicht dargestellt). Auf dieser Bahn gibt es kurz hinter der Position, in der die Befüllung des Kapselunterteils 1 mit der aus Pulver bestehenden Füllmasse erfolgt, einen Bereich, in dem die Schlitten 9 mit der Matrize weitgehend freigestellt und gut zugänglich sind. Mit Hilfe einer CCD-Kamera 4 und einer zugehörigen Optik 3, 5 wird von oben in das offene Kapselunterteil 1 hinein kurz nach der erfolgten Befüllung ein Bild aufgezeichnet und die Bilder zur Auswertung weitergeleitet. Dazu werden die Kamerabilder auf einen Computer übertragen und dort mit einem geeigneten Algorithmus ausgewertet. Um die Auswertung der Bilder zu erleichtern und vor allem möglichst unempfindlich gegenüber Störungen zu machen, werden die Bilder im Kontrast gesteigert. In dieser Hinsicht ist es ungünstig, von oben in das Kapselunterteil 1 die Füllmasse 2 lediglich anzuleuchten. Stattdessen hat es sich als vorteilhaft erwiesen, das Kapselunterteil 1 von unten mit einem intensiven Lichtblitz zu durchleuchten und das Bild im Gegenlicht aufzunehmen, wie mit den gestrichelten Pfeilen in Figur 1 skizziert ist. Dazu befindet sich ein durchgängiges Loch 7 im Schlitten 9 und in den Matrizen, in denen die Kapselunterteile 1 stecken. Das Kapselunterteil 1 wird mit Hilfe einer Leuchtdiode 6, die unterhalb der Bewegungsebene des Schlittens 9 angeordnet ist, durchleuchtet.

Oberhalb der Bewegungsebene des Schlittens befindet sich ein Spiegel 3, der das durch das Kapselunterteil 1 transmittierte Licht im rechten Winkel reflektiert und durch ein Objektiv 5 hindurch auf den CCD-Chip 4 einer Kamera projiziert wird. Die Schlitten mit den Kapselunterteilen bewegen sich mit einer Bahngeschwindigkeit von etwa 1,30 m/s zwischen Lichtquelle und Spiegel hindurch. Da die Kapseln nur einen Durchmesser von etwa 5 mm besitzen, wird ein entsprechend großer Abbildungsmaßstab gewählt. Damit unter diesen Bedingungen trotzdem hinreichend scharfe Bilder entstehen, werden entsprechend kurze Kamerabelichtungszeiten verwendet. Um trotz der kurzen Integrationszeit des CCD-Chips 4 ein gutes Signal-Rausch-Verhältnis zu erzielen und um die Blende des Objektivs im Interesse einer ausreichenden Schärfentiefe nicht allzu weit öffnen zu müssen, wird die Kapsel mit sehr intensivem Licht einer LED 6 durchleuchtet. Es hat sich gezeigt, dass entsprechende Lichtintensitäten leicht und zuverlässig mit Leuchtemitterdioden (LEDs) erreicht werden. Die Kamerabelichtungszeit beträgt beispielsweise 50 µs. In dieser Zeit hat sich das Kapselunterteil um ca. 65 µm weiterbewegt. Die aus der Bewegung resultierende Unschärfe des Bildes ist vernachlässigbar.

Die aufgezeichneten Bilder werden auf einen Rechner übertragen und sofort ausgewertet. Wenn die Kapselfüllmaschine mit der Standardgeschwindigkeit von 80 000 Kapseln pro Stunde betrieben wird, stehen für den kompletten Zyklus aus Bilderfassung und -auswertung 45 ms zur Verfügung. Sollte es durch verschiedene Faktoren des Betriebssystems und der Software zur Bildauswertung zu einer verzögerten Auswertung eines einzelnen Bildes kommen, ist eine Zwischenspeicherung des Bildes bzw. der auflaufenden Bilder, beispielsweise durch einen Ringspeicher, vorgesehen. Dadurch wird sichergestellt, dass keine Bilder verlorengehen und die eindeutige Zuordnung der Bilder zu den Befüllvorrichtungen erhalten bleibt. Für jedes Bild liegt jedoch spätestens nach 450 ms das Ergebnis der Auswertung vor, weil nach dieser Zeit die betreffende Kapsel vor der für die Aussortierung vorgesehene Düse angekommen ist, die die Kapsel gegebenenfalls in den Ausschussbehälter ausblasen soll.

Der Auswertealgorithmus leistet in einer Ausgestaltung folgendes:
Der Algorithmus erkennt die Position des Kapselunterteils im aufgezeichneten Bild, was auf Grund der mechanischen Variabilität in der Maschine und der damit verbundenen unterschiedlichen Position des Kapselunterteils notwendig sein kann. Er maskiert Bildbereiche die außerhalb des Kapselunterteils liegen und erkennt zerbrochene oder anderweitig schadhafte Füllmassen. Sind neben der Füllmasse weitere Pulverbrocken mit einer gewissen Mindestgröße vorhanden, werden diese ebenfalls detektiert.

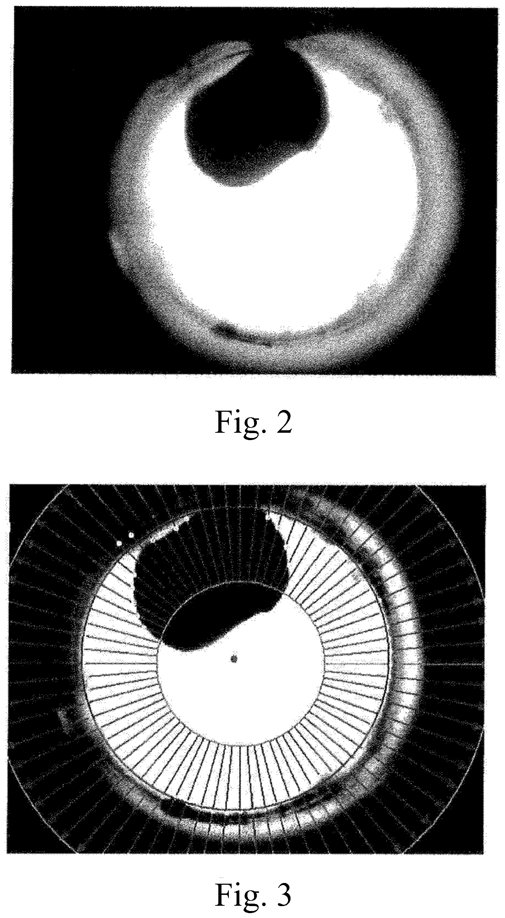

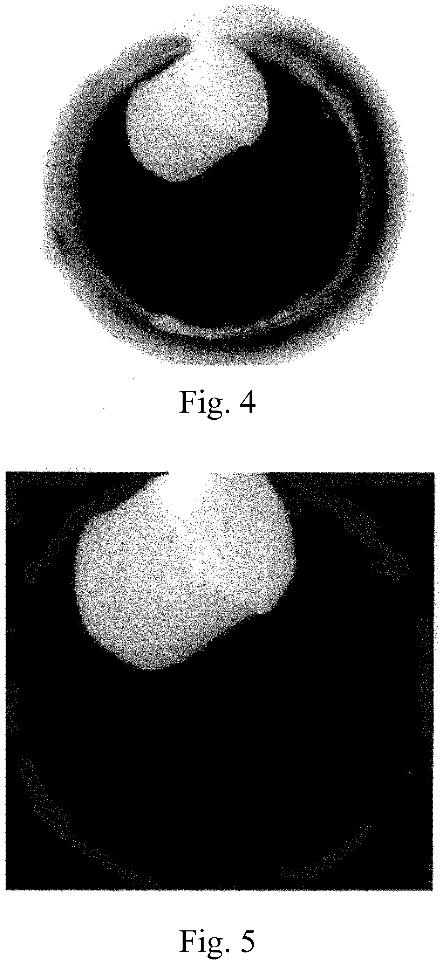

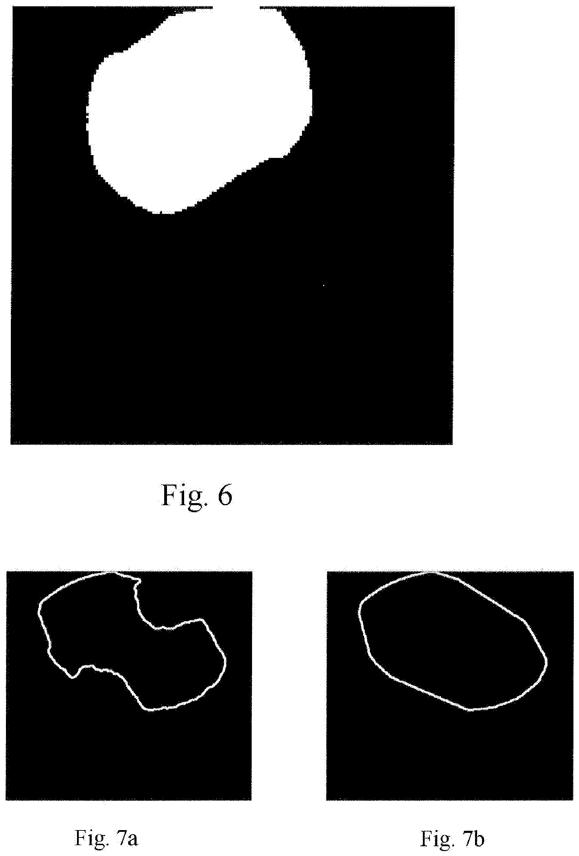

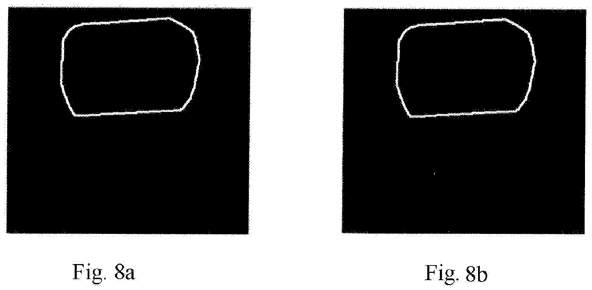

Im Einzelnen vollzieht sich die Bildverarbeitung in folgenden Schritten:
1. Von einer Kamera wird ein Grauwertbild aufgezeichnet, wobei in das Bild eine Kennung eingeblendet wird, um eine eindeutige Zuordnung zwischen Kapselteil und Aufzeichnung zu erhalten, wie in Fig. 2 gezeigt ist.
2. Da die Kapselunterteile nicht immer an derselben Position zu sehen sein können, wird die Kapsel im Bild lokalisiert, wie Fig. 3 zeigt.
3. Das Bild wird invertiert, wie in Fig. 4 gezeigt.
4. Anschließend wird das Bild so maskiert, dass nur noch der Bereich im Innern der Kapsel übrig bleibt, wie Fig. 5 zeigt.
5. Das Grauwertbild wird mit Hilfe eines in geeigneter Weise festgelegten Schwellenwerts in ein Binärbild umgewandelt, wie Fig. 6 zeigt.
6. Eine zerbrochene Füllmasse ist dadurch charakterisiert, dass die Kontur des Umfangs konkave Bereiche aufweist. Die konkaven Bereiche werden mittels des Konvexitätsparameters ermittelt. Die Figuren 7a und 8a zeigen jeweils die Original-Kontur, d.h die aufgezeichnete Kontur. Die Figuren 7b und 8b zeigen jeweils eine durch eine konvexe Hülle angenäherte Form der aufgezeichneten Kontur. Der Konvexitätsparameter α ist gleich dem Quotienten aus dem Umfang der konvexen Annäherung und dem Umfang der Original-Kontur. Im Fall der Figuren 7a und 7b ergibt sich beispielsweise ein α-Wert von 0,903, wohingegen der α-Wert der Figuren 8a und 8b 0,994 beträgt. Demnach entspricht die Figur 7a bzw. 7b einer fehlerhaften Befüllung des Kapselunterteils, wohingegen die Figur 8a bzw. 8b einer fehlerfreien Befüllung mit einem α-Wert von nahezu 1 entspricht.

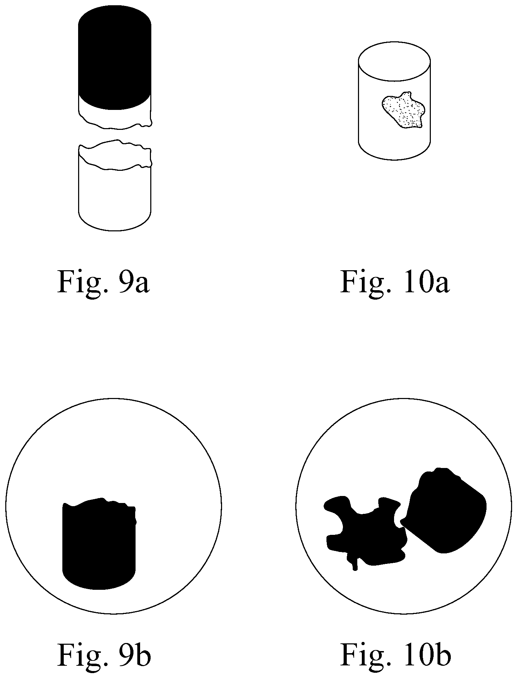

Die Figuren 9a, 9b, 10a und 10b verdeutlichen die Zusammenhänge zwischen beschädigter Füllmasse, unterfüllter Kapsel und aufgezeichneter Kontur. In Figur 9a ist die aus Pulver bestehende Füllmasse nicht vollständig vom Stößel abgefallen. Ein Teil der Füllmasse ist hängengeblieben. Dies kann beispielsweise am ungünstigen Haftverhalten des Pulvers liegen. Bei der Aufzeichnung, also nach der Befüllung und wie in Fig. 9b dargestellt, ist zwar die Füllmasse an sich nicht weiter zerbrochen, ist aber aufgrund des nur teilweisen Abriss vom Stößel zerklüftet und wird vom Überwachungsverfahren als fehlerhaft detektiert. In Figur 10a ist die Dichte der Füllmasse inhomogen, d.h. teilweise zu niedrig, so dass über das gesamte Volumen gemittelt die Dichte zu gering ist. Beispielsweise liegt das an einem inhomogenen Pulverbett oder an schlecht verfüllten Einstichlöchern. Wie in Fig. 10b gezeigt, ist der Pfropfen nach der Befüllung und bei der Aufzeichnung aufgrund mangelnder Stabilität in mehrere Bruchstücke zerbrochen, und eine fehlerhafte Befüllung ist u.a. durch das Vorliegen der Bruchstücke besonders leicht zu detektieren.

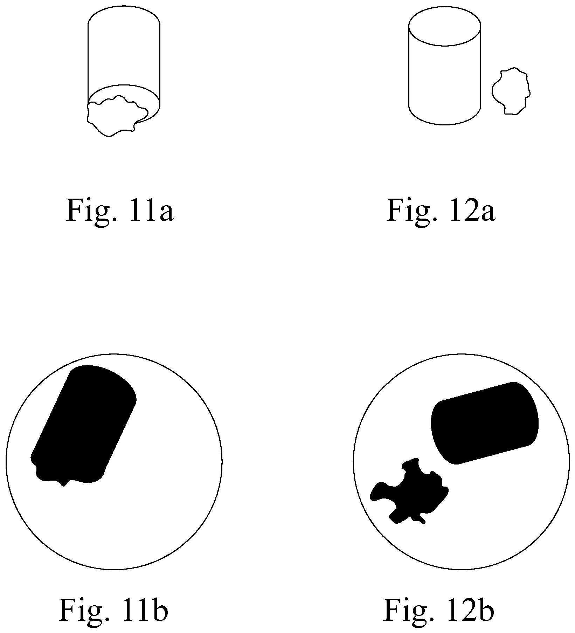

Die Figuren 11a, 11b, 12a und 12b verdeutlichen die Zusammenhänge zwischen beschädigter Füllmasse, überfüllter Kapsel und aufgezeichneter Kontur. In Figur 11a ist die Unterseite der Füllmasse nicht sauber ausgebildet. Dies kann beispielsweise an einer schlecht eingestellten Absaugstrecke liegen. Bei der Aufzeichnung, also nach der Befüllung und wie in Fig. 11b dargestellt, ist zwar die Füllmasse an sich nicht zerbrochen, aber aufgrund der unsauberen Ausbildung der Unterseite ist der Schatten im Bild zu groß und zu zerklüftet. Deshalb wird vom Überwachungsverfahren die zu dem Bild gehörende Kapsel als schlechte Kapsel klassifizier

In Figur 12a ist gezeigt, dass neben der eigentlichen Füllmasse zusätzliche Sekundärpartikel in das Kapselunterteil gelangen. Dies kann an Pulveranhaftungen an Teilen der Dosiereinrichtung, verschmutzten Matrizenscheiben und Pulverakkumulationen oberhalb der Stößelspitze liegen. Bei der Aufzeichnung, also nach der Befüllung und wie in Fig. 12b dargestellt, ist zwar die Füllmasse an sich nicht zerbrochen. Die Sekundärbrocken werden vom Bildauswertealgorithmus erkannt. Liegt die Fläche dieser Brocken oberhalb einer definierten Grenze, dann enthält die Kapsel wahrscheinlich zu viel Pulver und wird als "schlecht" betrachtet.

Besonders bevorzugt gelangt das erfindungsgemäße Verfahren bei Kapseln zur Anwendung, die pulverförmige Medikamente für die Inhalation, so genannte Inhalativa, enthalten. Diese pulverförmigen Medikamente können einen Wirkstoff im Gemisch mit einem physiologisch unbednklichen Hilfsstoff enthalten.

Als physiologisch unbedenkliche Hilfsstoffe seien beispielsweise genannt: Monosaccharide (z.B. Glucose oder Arabinose), Disaccharide (z.B. Lactose, Saccharose, Maltose oder Trehalose), Oligo- und Polysaccharide (z.B. Dextrane), Polyalkohole (z.B. Sorbit, Mannit, Xylit), Salze (z.B. Natriumchlorid, Calciumcarbonat) oder Mischungen dieser Hilfsstoffe miteinander. Bevorzugt gelangen Mono- oder Disaccharide zur Anwendung, wobei die Verwendung von Lactose, Glucose oder Trehalose, bevorzugt Lactose oder Glucose, insbesondere, aber nicht ausschließlich in Form ihrer Hydrate, bevorzugt ist. Als besonders bevorzugt im Sinne der Erfindung gelangt Lactose, höchst bevorzugt Lactosemonohydrat als Hilfsstoff zur Anwendung.

Die genannten Hilfsstoffe sind üblicherweise dadurch gekennzeichnet, daß der Hilfsstoff eine mittlere Teilchengröße von 10 - 50 µm aufweist.

Dabei wird unter der mittleren Teilchengröße im hier verwendeten Sinne der 50 % - Wert aus der Volumenverteilung gemessen mit einem Laserdiffraktometer nach der Trockendispersionsmethode verstanden.

Bei den im Rahmen der vorliegenden Erfindung genannten prozentualen Angaben, handelt es sich stets um Gewichtsprozent, soweit nichts Gegenteiliges spezifisch hervorgehoben wird.

In besonders bevorzugten Inhalationspulvern ist der Hilfsstoff durch eine mittlere Teilchengröße von 12 bis 35 µm, besonders bevorzugt von 13 bis 30 µm gekennzeichnet.

Alternative pharmazeutische Zusammensetzungen sind ferner dadurch gekennzeichnet, daß der Hilfsstoff aus einem Gemisch von gröberem Hilfsstoff mit einer mittleren Teilchengröße von 17 bis 50µm, besonders bevorzugt von 20 bis 30µm und feinerem Hilfststoff mit einer mittleren Teilchengröße von 2 bis 8µm, besonders bevorzugt von 3 bis 7µm besteht. Bevorzugt sind Inhalationspulver bei denen der Anteil von feinerem Hilfsstoff an der Gesamthilfsstoffmenge 3 bis 15%, besonders bevorzugt 5 bis 10% beträgt.

Wird im Rahmen der vorliegenden Erfindung auf die Bezeichnung Gemisch Bezug genommen, so ist hierbei stets eine Mischung zu verstehen, die durch Mischen zuvor klar definierter Komponenten erhalten wurde. Entsprechend sind beispielsweise als Hilfsstoffgemisch aus gröberen und feineren Hilfsstoffanteilen nur solche Gemische zu verstehen, die durch Mischen einer gröberen Hilfsstoffkomponente mit einer feineren Hilfsstoffkomponente erhalten werden.

Die gröberen und feineren Hilfsstoffanteile können aus dem chemisch gleichen oder aus chemisch verschiedenen Substanzen bestehen, wobei Inhalationspulver, bei denen der gröbere Hilfsstoffanteil und der feinere Hilfsstoffanteil aus der selben chemischen Verbindung bestehen bevorzugt sind.

Für die Anwendung der erfindungsgemäßen Inhalationspulver mittels pulverhaltiger Kapseln werden bevorzugt Kapseln verwendet, deren Hülle aus Gelatine, Cellulosederivaten, Stärke, Stärkederivaten, Chitosan oder synthetischen Kunststoffen gefertigt ist.

Wird Gelatine als Kapselmaterial verwendet, so kann diese im Gemisch mit anderen Zusätzen ausgewählt aus der Gruppe bestehend aus Polyethylenglycol (PEG), bevorzugt PEG 3350, Glycerol, Sorbitol, Propylenglycol, PEO-PPO-Blockcopolymeren und anderen Polyalkoholen und Polyethern zum Einsatz kommen. Besonders bevorzugt wird im Rahmen der vorliegenden Erfindung Gelatine im Gemisch mit PEG, bevorzugt PEG 3350, verwendet. Besonders bevorzugt enthält eine erfindungsgemäße Gelatine-Kapsel PEG in einem Anteil von 1-10% (Gew-%), bevorzugt 3-8 %. Besonders bevorzugte Gelatine-Kapseln enthalten PEG in einem Anteil von 4-6%, wobei ein PEG-Anteil von etwa 5% erfindungsgemäß höchstbevorzugt ist.

Werden Cellulosederivate als Kapselmaterial verwendet, so ist die Verwendung von Hydroxypropylmethylcellulose, Hydroxypropylcellulose, Methylcellulose, Hydroxymethylcellulose und Hydroxyethylcellulose bevorzugt. Besonders bevorzugt wird in diesem Fall Hydroxypropylmethylcellulose (HPMC), besonders bevorzugt HPMC 2910 als Kapselmaterial eingesetzt.

Werden als Kapselmaterial synthetische Kunststoffe eingesetzt, so sind diese erfindungsgemäß bevorzugt ausgewählt aus der Gruppe bestehend aus Polyethylen Polycarbonat, Polyester, Polypropylen und Polyethylenterephthalat. Besonders bevorzugt sind als synthetische Kunststoffmaterialien für die erfindungsgemäßen Inhalationskapseln Polyethylen, Polycarbonat oder Polyethylenterephthalat. Wird Polyethylen als eines der erfindungsgemäß besonders bevorzugten Kapselmaterialien verwendet, gelangt vorzugsweise Polyethylen mit einer Dichte zwischen 900 und 1000 kg/m3, bevorzugt von 940 - 980 kg/m3, besonders bevorzugt von etwa 960 - 970 kg/m3 (high-density Polyethylen) zur Anwendung.

Die synthetischen Kunststoffe im Sinne der Erfindung können vielseitig mittels dem im Stand der Technik bekannten Herstellverfahren verarbeitet werden. Bevorzugt im Sinne der Erfindung wird die spritzgusstechnische Verarbeitung der Kunststoffe. Besonders bevorzugt wird die Spritzgusstechnik unter Verzicht auf die Verwendung von Formtrennmitteln. Dieses Herstellverfahren ist wohldefiniert und durch eine besonders gute Reproduzierbarkeit gekennzeichnet.

Diese Kapseln können bevorzugt etwa 1 bis 20 mg, bevorzugt etwa 3 bis 15 mg, besonders bevorzugt etwa 4 bis 12 mg Inhalationspulver enthalten. Erfindungsgemäß bevorzugte Formulierungen enthalten 4 bis 6 mg Inhalationspulver. Von erfindungsgemäß gleichrangiger Bedeutung sind Inhalationskapseln, die die die erfindungsgemäßen Formulierungen in einer Menge von 8 bis 12 mg enthalten.

Die Wirkstoffe, die in den pulverförmigen Medikamenten enthalten sein können, sind vorzugsweise ausgewählt aus der Gruppe der Betamimetika, Anticholinergika, Corticosteroide, PDE4-Inhibitoren, LTD4-Antagonisten, EGFR-Hemmer, Dopamin-Agonisten, H1-Antihistaminika, PAF-Antagonisten und PI3-Kinase Inhibitoren.

Als Betamimetika gelangen hierbei vorzugsweise Verbindungen zur Anwendung, die ausgewählt sind aus der Gruppe bestehend aus Albuterol, Arformoterol, Bambuterol, Bitolterol, Broxaterol, Carbuterol, Clenbuterol, Fenoterol, Formoterol, Hexoprenaline, Ibuterol, Isoetharine, Isoprenaline, Levosalbutamol, Mabuterol, Meluadrine, Metaproterenol, Orciprenaline, Pirbuterol, Procaterol, Reproterol, Rimiterol, Ritodrine, Salmefamol, Salmeterol, Soterenol, Sulphonterol, Terbutaline, Tiaramide, Tolubuterol, Zinterol, CHF-1035, HOKU-81, KUL-1248, 3-(4-{6-[2-Hydroxy-2-(4-hydroxy-3-hydroxymethyl-phenyl)-ethylamino]-hexyloxy}-butyl)-benzyl-sulfonamid, 5-[2-(5,6-Diethyl-indan-2-ylamino)-1-hydroxy-ethyl]-8-hydroxy-1H-quinolin-2-on, 4-Hydroxy-7-[2-{[2-{[3-(2-phenylethoxy)propyl]sulphonyl}ethyl]-amino}ethyl]-2(3H)-benzothiazolon, 1-(2-Fluor-4-hydroxyphenyl)-2-[4-(1-benzimidazolyl)-2-methyl-2-butylamino]ethanol, 1-[3-(4-Methoxybenzyl-amino)-4-hydroxyphenyl]-2-[4-(1-benzimidazolyl)-2-methyl-2-butylamino]ethanol, 1-[2H-5-hydroxy-3-oxo-4H-1,4-benzoxazin-8-yl]-2-[3-(4-N,N-dimethylaminophenyl)-2-methyl-2-propylamino]ethanol, 1-[2H-5-hydroxy-3-oxo-4H-1,4-benzoxazin-8-yl]-2-[3-(4-methoxyphenyl)-2-methyl-2-propylamino]ethanol, 1-[2H-5-hydroxy-3-oxo-4H-1,4-benzoxazin-8-yl]-2-[3-(4-n-butyloxyphenyl)-2-methyl-2-propylamino]ethanol, 1-[2H-5-hydroxy-3-oxo-4H-1,4-benzoxazin-8-yl]-2-{4-[3-(4-methoxyphenyl)-1,2,4-triazol-3-yl]-2-methyl-2-butylamino}ethanol, 5-Hydroxy-8-(1-hydroxy-2-isopropylaminobutyl)-2H-1,4-benzoxazin-3-(4H)-on, 1-(4-Amino-3-chlor-5-trifluormethylphenyl)-2-tert.-butylamino)ethanol, 6-Hydroxy-8-{1-hydroxy-2-[2-(4-methoxy-phenyl)-1,1-dimethyl-ethylamino]-ethyl}-4H-benzo[1,4]oxazin-3-on, 6-Hydroxy-8-{1-hydroxy-2-[2-(4-phenoxy-essigsäureethylester)-1,1-dimethyl-ethylamino]-ethyl}-4H-benzo[1,4]oxazin-3-on, 6-Hydroxy-8-{1-hydroxy-2-[2-(4-phenoxy-essigsäure)-1,1-dimethyl-ethylamino]-ethyl}-4H-benzo[1,4]oxazin-3-on, 8-{2-[1,1-Dimethyl-2-(2,4,6-trimethylphenyl)-ethylamino]-1-hydroxy-ethyl}-6-hydroxy-4H-benzo[1,4]oxazin-3-on, 6-Hydroxy-8-{1-hydroxy-2-[2-(4-hydroxy-phenyl)-1,1-dimethyl-ethylamino]-ethyl}-4H-benzo[1,4]oxazin-3-on, 6-hydroxyl-hydroxy-2-[2-(4-isopropyl-phenyl)-1,1dimethyl-ethylamino]-ethyl}-4H-benzo[1,4]oxazin-3-on, 8-{2-[2-(4-Ethyl-phenyl)-1,1-dimethyl-ethylamino]-1-hydroxy-ethyl}-6-hydroxy-4H-benzo[1,4]oxazin-3-on, 8-{2-[2-(4-Ethoxyphenyl)-1,1-dimethyl-ethylamino]-1-hydroxy-ethyl}-6-hydroxy-4H-benzo[1,4]oxazin-3-on, 4-(4-{2-[2-Hydroxy-2-(6-hydroxy-3-oxo-3,4-dihydro-2H-benzo[1,4]oxazin-8-yl)-ethylamino]-2-methyl-propyl}-phenoxy)-buttersäure, 8-{2-[2-(3,4-Difluor-phenyl)-1,1-dimethyl-ethylamino]-1-hydroxyethyl}-6-hydroxy-4H-benzo[1,4]oxazin-3-on, 1-(4-Ethoxy-carbonylamino-3-cyano-5-fluorophenyl)-2-(tert.-butylamino)ethanol, 2-Hydroxy-5-(1-hydroxy-2-{2-[4-(2-hydroxy-2-phenyl-ethylamino)-phenyl]-ethylamino}-ethyl)-benzaldehyd, N-[2-Hydroxy-5-(1-hydroxy-2-{2-[4-(2-hydroxy-2-phenyl-ethylamino)-phenyl]-ethylamino}-ethyl)-phenyl]-formamid, 8-Hydroxy-5-(1-hydroxy-2-{2-[4-(6-methoxy-biphenyl-3-ylamino)-phenyl]-ethylamino}-ethyl)-1H-quinolin-2-on, 8-Hydroxy-5-[1-hydroxy-2-(6-phenethylamino-hexylamino)-ethyl]-1H-quinolin-2-on, 5-[2-(2-{4-[4-(2-Amino-2-methyl-propoxy)-phenylamino]-phenyl}-ethylamino)-1-hydroxy-ethyl]-8-hydroxy-1H-quinolin-2-on, [3-(4-{6-[2-Hydroxy-2-(4-hydroxy-3-hydroxymethyl-phenyl)-ethylamino]-hexyloxy}-butyl)-5-methyl-phenyl]-harnstoff, 4-(2-{6-[2-(2,6-Dichloro-benzyloxy)-ethoxy]-hexylamino}-1-hydroxy-ethyl)-2-hydroxymethyl-phenol, 3-(4-{6-[2-Hydroxy-2-(4-hydroxy-3-hydroxymethyl-phenyl)-ethylamino]-hexyloxy}-butyl)-benzylsulfonamid, 3-(3-{7-[2-Hydroxy-2-(4-hydroxy-3-hydroxymethyl-phenyl)-ethylamino]-heptyloxy}-propyl)-benzylsulfonamid, 4-(2-{6-[4-(3-Cyclopentanesulfonyl-phenyl)-butoxy]-hexylamino}-1-hydroxy-ethyl)-2-hydroxymethyl-phenol, N-Adamantan-2-yl-2-(3-{2-[2-hydroxy-2-(4-hydroxy-3-hydroxymethyl-phenyl)-ethylamino]-propyl}-phenyl)-acetamid, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze der Betamimetika ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als Anticholinergika gelangen hierbei vorzugsweise Verbindungen zur Anwendung, die ausgewählt sind aus der Gruppe bestehend aus Tiotropiumsalzen, bevorzugt das Bromidsalz, Oxitropiumsalzen, bevorzugt das Bromidsalz, Flutropiumsalzen, bevorzugt das Bromidsalz, Ipratropiumsalzen, bevorzugt das Bromidsalz, Glycopyrroniumsalzen, bevorzugt das Bromidsalz, Trospiumsalzen, bevorzugt das Chloridsalz, Tolterodin und Aclidinium, bevorzugt als Bromidsalz.

Weitere bevorzugt einsetzbare Anticholinergika sind ausgewählt aus der Gruppe bestehend aus 2,2-Diphenylpropionsäuretropenolester-Methobromid, 2,2-Diphenylpropionsäurescopinester-Methobromid, 2-Fluor-2,2-Diphenylessigsäurescopinester-Methobromid, 2-Fluor-2,2-Diphenylessigsäure-tropenolester-Methobromid, 3,3',4,4'-Tetrafluorbenzilsäuretropenolester-Methobromid, 3,3',4,4'-Tetrafluorbenzilsäurescopinester-Methobromid, 4,4'-Difluorbenzilsäuretropenolester-Methobromid, 4,4'-Difluorbenzilsäurescopinester-Methobromid, 3,3'-Difluorbenzilsäuretropenolester-Methobromid, 3,3'-Difluorbenzilsäurescopinester-Methobromid, 9-Hydroxy-fluoren-9-carbonsäuretropenolester-Methobromid, 9-Fluor-fluoren-9-carbonsäuretropenolester-Methobromid , 9-Hydroxy-fluoren-9-carbonsäurescopinester-Methobromid , 9-Fluor-fluoren-9-carbonsäurescopinester-Methobromid, 9-Methyl-fluoren-9-carbonsäuretropenolester-Methobromid, 9-Methyl-fluoren-9-carbonsäure-scopinester-Methobromid , Benzilsäurecyclopropyltropinester-Methobromid , 2,2-Diphenylpropionsäurecyclopropyltropinester-Methobromid, 9-Hydroxy-xanthen-9-carbonsäurecyclopropyltropinester-Methobromid, 9-Methyl-fluoren-9-carbonsäurecyclopropyltropinester-Methobromid, 9-Methyl-xanthen-9-carbonsäurecyclopropyltropinester-Methobromid, 9-Hydroxy-fluoren-9-carbonsäurecyclopropyltropinester-Methobromid, 4,4'-Difluorbenzilsäuremethylestercyclopropyltropinester-Methobromid, 9-Hydroxy-xanthen-9-carbonsäuretropenolester-Methobromid, 9-Hydroxy-xanthen-9-carbonsäure-scopinester-Methobromid , 9-Methyl-xanthen-9-carbonsäuretropenolester-Methobromid, 9-Methyl-xanthen-9-carbonsäurescopinester-Methobromid , 9-Ethyl-xanthen-9-carbonsäuretropenolester-Methobromid, 9-Difluormethyl-xanthen-9-carbonsäuretropenolester-Methobromid und 9-Hydroxymethyl-xanthen-9-carbonsäurescopinester-Methobromid. Die vorstehend genannten Methobromide sind im Rahmen der vorliegenden Erfindung auch als Salze einsetzbar, in denen statt des Methobromids, die Salze Metho-X zur Anwendung gelangen, wobei X ausgewählt aus der Gruppe bestehend aus Fluorid, Chlorid, Iodid, Sulfat, Phosphat, Methansulfonat, Nitrat, Maleat, Acetat, Citrat, Fumarat, Tartrat, Oxalat, Succinat, Benzoat und p-Toluolsulfonat sein kann.

Als Corticosteroide gelangen hierbei vorzugsweise Verbindungen zur Anwendung, die ausgewählt sind aus der Gruppe bestehend aus Beclomethason, Betamethason, Budesonid, Butixocort, Ciclesonid, Deflazacort, Dexamethason, Etiprednol, Flunisolid, Fluticason, Loteprednol, Mometason, Prednisolon, Prednison, Rofleponid, Triamcinolon, RPR-106541, NS-126, ST-26, 6,9-Difluor-17-[(2-furanylcarbonyl)oxy]-11-hydroxy-16-methyl-3-oxo-androsta-1,4-dien-17-carbothionsäure (S)-fluoromethylester, 6,9-Difluor-11-hydroxy-16-methyl-3-oxo-17-propionyloxy-androsta-1,4-dien-17-carbothionsäure (S)-(2-oxotetrahydro-furan-3S-yl)ester und 6α,9α-difluoro-11β-hydroxy-16α-methyl-3-oxo-17α-(2,2,3,3-tertamethylcyclopropylcarbonyl)oxy-androsta-1,4-diene-17β-carbonsäure cyanomethyl ester, gegebenenfalls in Form ihrer Racemate, Enantiomere oder Diastereomere und gegebenenfalls in Form ihrer Salze und Derivate, ihrer Solvate und/oder Hydrate. Jede Bezugnahme auf Steroide schließt eine Bezugnahme auf deren gegebenenfalls existierende Salze oder Derivate, Hydrate oder Solvate mit ein. Beispiele möglicher Salze und Derivate der Steroide können sein: Alkalisalze, wie beispielsweise Natrium- oder Kaliumsalze, Sulfobenzoate, Phosphate, Isonicotinate, Acetate, Dichloroacetate, Propionate, Dihydrogenphosphate, Palmitate, Pivalate oder auch Furoate.

Als PDE4-Inhibitoren gelangen hierbei vorzugsweise Verbindungen zur Anwendung, die ausgewählt sind aus der Gruppe bestehend aus Enprofyllin, Theophyllin, Roflumilast, Ariflo (Cilomilast), Oglemilast, Tofimilast, Pumafentrin, Lirimilast, Arofyllin, Atizoram, D-4418, Bay-198004, BY343, CP-325,366, D-4396 (Sch-351591), AWD-12-281 (GW-842470), NCS-613, CDP-840, D-4418, PD-168787, T-440, T-2585, V-11294A, CI-1018, CDC-801, CDC-3052, D-22888, YM-58997, Z-15370, N-(3,5-Dichloro-1-oxo-pyridin-4-yl)-4-difluormethoxy-3-cyclopropylmethoxybenzamid, (-)p-[(4aR*,10bS*)-9-Ethoxy-1,2,3,4,4a,10b-hexahydro-8-methoxy-2-methylbenzo[s][1,6]naphthyridin-6-yl]-N,N-diisopropylbenzamid, (R)-(+)-1-(4-Brombenzyl)-4-[(3-cyclopentyloxy)-4-methoxyphenyl]-2-pyrrolidon, 3-(Cyclopentyloxy-4-methoxyphenyl)-1-(4-N'-[N-2-cyano-S-methyl-isothioureido]benzyl)-2-pyrrolidon, cis[4-Cyano-4-(3-cyclopentyloxy-4-methoxyphenyl)cyclohexan-1-carbonsäure], 2-carbomethoxy-4-cyano-4-(3-cyclopropylmethoxy-4-difluoromethoxyphenyl)cyclohexan-1-on, cis[4-Cyano-4-(3-cyclopropylmethoxy-4-difluormethoxyphenyl)cyclohexan-1-ol],
(R)-(+)-Ethyl[4-(3-cyclopentyloxy-4-methoxyphenyl)pyrrolidin-2-yliden]acetat, (S)-(-)-Ethyl[4-(3-cyclopentyloxy-4-methoxyphenyl)pyrrolidin-2-yliden]acetat, 9-Cyclopentyl-5,6-dihydro-7-ethyl-3-(2-thienyl)-9H-pyrazolo[3,4-c]-1,2,4-triazolo[4,3-a]pyridin und 9-Cyclopentyl-5,6-dihydro-7-ethyl-3-(tert-butyl)-9H-pyrazolo[3,4-c]-1,2,4-triazolo[4,3-a]pyridin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als LTD4-Antagonisten gelangen hierbei vorzugsweise Verbindungen zur Anwendung, die ausgewählt sind aus der Gruppe bestehend aus Montelukast, Pranlukast, Zafirlukast, MCC-847 (ZD-3523), MN-001, MEN-91507 (LM-1507), VUF-5078, VUF-K-8707, L-733321, 1-(((R)-(3-(2-(6,7-Difluor-2-quinolinyl)ethenyl)phenyl)-3-(2-(2- hydroxy-2-propyl)phenyl)thio)-methylcyclopropan-essigsäure, 1-(((1(R)-3(3-(2-(2,3-Dichlorthieno[3,2-b]pyridin-5-yI)-(E)-ethenyl)phenyl)-3-(2-(1-hydroxy-1-methylethyl)phenyl)-propyl)thio)methyl)cyclopropanessigsäure und [2-[[2-(4-tert-Butyl-2-thiazolyl)-5-benzofuranyl]oxymethyl]phenyl]essigsäure, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat. Unter Salzen oder Derivaten zu deren Bildung die LTD4-Antagonisten gegebenenfalls in der Lage sind, werden beispielsweise verstanden: Alkalisalze, wie beispielsweise Natrium- oder Kaliumsalze, Erdalkalisalze, Sulfobenzoate, Phosphate, Isonicotinate, Acetate, Propionate, Dihydrogenphosphate, Palmitate, Pivalate oder auch Furoate.

Als EGFR-Hemmer gelangen hierbei vorzugsweise Verbindungen zur Anwendung, die ausgewählt sind aus der Gruppe bestehend aus Cetuximab, Trastuzumab, ABX-EGF, Mab ICR-62, 4-[(3-Chlor-4-fluorphenyl)amino]-6-{[4-(morpholin-4-yl)-1-oxo-2-buten-1-yl]amino}-7-cyclopropylmethoxy-chinazolin, 4-[(3-Chlor-4-fluorphenyl)amino]-6-{[4-(N,N-diethylamino)-1-oxo-2-buten-1-yl]amino}-7-cyclopropylmethoxy-chinazolin, 4-[(3-Chlor-4-fluorphenyl)amino]-6-{[4-(N,N-dimethylamino)-1-oxo-2-buten-1-yl]amino}-7-cyclopropylmethoxy-chinazolin, 4-[(R)-(1-Phenyl-ethyl)amino]-6-{[4-(morpholin-4-yl)-1-oxo-2-buten-1-yl]amino}-7-cyclopentyloxy-chinazolin, 4-[(3-Chlor-4-fluorphenyl)amino]-6-{[4-((R)-6-methyl-2-oxo-morpholin-4-yl)-1-oxo-2-buten-1-yl]amino}-7-cyclopropylmethoxy-chinazolin, 4-[(3-Chlor-4-fluor-phenyl)amino]-6-{[4-((R)-6-methyl-2-oxo-morpholin-4-yl)-1-oxo-2-buten-1-yl]amino}-7-[(S)-(tetrahydrofuran-3-yl)oxy]-chinazolin, 4-[(3-Chlor-4-fluor-phenyl)amino]-6-{[4-((R)-2-methoxymethyl-6-oxo-morpholin-4-yl)-1-oxo-2-buten-1-yl]amino}-7-cyclopropylmethoxy-chinazolin, 4-[(3-Chlor-4-fluor-phenyl)amino]-6-[2-((S)-6-methyl-2-oxo-morpholin-4-yl)-ethoxy]-7-methoxy-chinazolin, 4-[(3-Chlor-4-fluorphenyl)amino]-6-({4-[N-(2-methoxy-ethyl)-N-methyl-amino]-1-oxo-2-buten-1-yl}amino)-7-cyclopropylmethoxy-chinazolin, 4-[(3-Chlor-4-fluorphenyl)amino]-6-{[4-(N,N-dimethylamino)-1-oxo-2-buten-1-yl]amino}-7-cyclopentyloxy-chinazolin, 4-[(R)-(1-Phenyl-ethyl)amino]-6-{[4-(N,N-bis-(2-methoxy-ethyl)-amino)-1-oxo-2-buten-1-yl]amino}-7-cyclopropylmethoxy-chinazolin, 4-[(R)-(1-Phenyl-ethyl)amino]-6-({4-[N-(2-methoxy-ethyl)-N-ethyl-amino]-1-oxo-2-buten-1-yl}amino)-7-cyclopropylmethoxy-chinazolin, 4-[(R)-(1-Phenyl-ethyl)amino]-6-({4-[N-(2-methoxy-ethyl)-N-methyl-amino]-1-oxo-2-buten-1-yl}amino)-7-cyclopropylmethoxy-chinazolin, 4-[(R)-(1-Phenyl-ethyl)amino]-6-({4-[N-(tetrahydropyran-4-yl)-N-methyl-amino]-1-oxo-2-buten-1-yl}amino)-7-cyclopropylmethoxy-chinazolin, 4-[(3-Chlor-4-fluorphenyl)amino]-6-{[4-(N,N-dimethylamino)-1-oxo-2-buten-1-yl]amino}-7-((R)-tetrahydrofuran-3-yloxy)-chinazolin, 4-[(3-Chlor-4-fluorphenyl)amino]-6-{[4-(N,N-dimethylamino)-1-oxo-2-buten-1-yl]amino}-7-((S)-tetrahydrofuran-3-yloxy)-chinazolin, 4-[(3-Chlor-4-fluorphenyl)amino]-6-({4-[N-(2-methoxyethyl)-N-methyl-amino]-1-oxo-2-buten-1-yl}amino)-7-cyclopentyloxy-chinazolin, 4-[(3-Chlor-4-fluorphenyl)amino]-6-{[4-(N-cyclopropyl-N-methyl-amino)-1-oxo-2-buten-1-yl]amino}-7-cyclopentyloxy-chinazolin, 4-[(3-chlor-4-fluorphenyl)amino]-6-{[4-(N,N-dimethylamino)-1-oxo-2-buten-1-yl]amino}-7-[(R)-(tetrahydrofuran-2-yl)methoxy]-chinazolin, 4-[(3-Chlor-4-fluorphenyl)amino]-6-{[4-(N,N-dimethylamino)-1-oxo-2-buten-1-yl]amino}-7-[(S)-(tetrahydrofuran-2-yl)methoxy]-chinazolin, 4-[(3-Ethinyl-phenyl)amino]-6,7-bis-(2-methoxy-ethoxy)-chinazolin, 4-[(3-Chlor-4-fluorphenyl)amino]-7-[3-(morpholin-4-yl)-propyloxy]-6-[(vinylcarbonyl)amino]-chinazolin, 4-[(R)-(1-Phenyl-ethyl)amino]-6-(4-hydroxy-phenyl)-7H-pyrrolo[2,3-d]pyrimidin, 3-Cyano-4-[(3-chlor-4-fluorphenyl)amino]-6-{[4-(N,N-dimethylamino)-1-oxo-2-buten-1-yl]amino}-7-ethoxy-chinolin, 4-{[3-Chlor-4-(3-fluor-benzyloxy)-phenyl]amino}-6-(5-{[(2-methansulfonyl-ethyl)amino]methyl}-furan-2-yl)chinazolin, 4-[(R)-(1-Phenyl-ethyl)amino]-6-{[4-((R)-6-methyl-2-oxo-morpholin-4-yl)-1-oxo-2-buten-1-yl]amino}-7-methoxy-chinazolin, 4-[(3-Chlor-4-fluorphenyl)amino]-6-{[4-(morpholin-4-yl)-1-oxo-2-buten-1-yl]amino}-7-[(tetrahydrofuran-2-yl)methoxy]-chinazolin, 4-[(3-Chlor-4-fluorphenyl)amino]-6-({4-[N,N-bis-(2-methoxy-ethyl)-amino]-1-oxo-2-buten-1-yl}amino)-7-[(tetrahydrofuran-2-yl)methoxy]-chinazolin, 4-[(3-Ethinyl-phenyl)amino]-6-{[4-(5,5-dimethyl-2-oxo-morpholin-4-yl)-1-oxo-2-buten-1-yl]amino}-chinazolin, 4-[(3-Chlor-4-fluor-phenyl)amino]-6-[2-(2,2-dimethyl-6-oxo-morpholin-4-yl)-ethoxy]-7-methoxy-chinazolin, 4-[(3-Chlor-4-fluor-phenyl)amino]-6-[2-(2,2-dimethyl-6-oxo-morpholin-4-yl)-ethoxy]-7-[(R)-(tetrahydrofuran-2-yl)methoxy]-chinazolin, 4-[(3-Chlor-4-fluor-phenyl)amino]-7-[2-(2,2-dimethyl-6-oxo-morpholin-4-yl)-ethoxy]-6-[(S)-(tetrahydrofuran-2-yl)methoxy]-chinazolin, 4-[(3-Chlor-4-fluor-phenyl)amino]-6-{2-[4-(2-oxo-morpholin-4-yl)-piperidin-1-yl]-ethoxy}-7-methoxy-chinazolin, 4-[(3-Chlor-4-fluor-phenyl)amino]-6-[1-(tert.-butyloxycarbonyl)-piperidin-4-yloxy]-7-methoxy-chinazolin, 4-[(3-Chlor-4-fluor-phenyl)amino]-6-(trans-4-amino-cyclohexan-1-yloxy)-7-methoxy-chinazolin, 4-[(3-Chlor-4-fluor-phenyl)amino]-6-(trans-4-methansulfonylamino-cyclohexan-1-yloxy)-7-methoxy-chinazolin, 4-[(3-Chlor-4-fluor-phenyl)amino]-6-(tetrahydropyran-3-yloxy)-7-methoxy-chinazolin, 4-[(3-Chlor-4-fluor-phenyl)amino]-6-(1-methyl-piperidin-4-yloxy)-7-methoxy-chinazolin, 4-[(3-Chlor-4-fluor-phenyl)amino]-6-{1-[(morpholin-4-yl)carbonyl]-piperidin-4-yloxy}-7-methoxy-chinazolin, 4-[(3-Chlor-4-fluor-phenyl)amino]-6-{1-[(methoxymethyl)carbonyl]-piperidin-4-yloxy}-7-methoxy-chinazolin, 4-[(3-Chlor-4-fluor-phenyl)amino]-6-(piperidin-3-yloxy)-7-methoxy-chinazolin, 4-[(3-Chlor-4-fluor-phenyl)amino]-6-[1-(2-acetylamino-ethyl)-piperidin-4-yloxy]-7-methoxy-chinazolin, 4-[(3-Chlor-4-fluor-phenyl)amino]-6-(tetrahydropyran-4-yloxy)-7-ethoxy-chinazolin, 4-[(3-Chlor-4-fluor-phenyl)amino]-6-((S)-tetrahydrofuran-3-yloxy)-7-hydroxy-chinazolin, 4-[(3-Chlor-4-fluorphenyl)amino]-6-(tetrahydropyran-4-yloxy)-7-(2-methoxy-ethoxy)-chinazolin, 4-[(3-Chlor-4-fluor-phenyl)amino]-6-{trans-4-[(dimethylamino)sulfonylamino]-cyclohexan-1-yloxy}-7-methoxy-chinazolin, 4-[(3-Chlor-4-fluor-phenyl)amino]-6-{trans-4-[(morpholin-4-yl)carbonylamino]-cyclohexan-1-yloxy}-7-methoxy-chinazolin, 4-[(3-Chlor-4-fluor-phenyl)amino]-6-{trans-4-[(morpholin-4-yl)sulfonylamino]-cyclohexan-1-yloxy}-7-methoxy-chinazolin, 4-[(3-Chlor-4-fluor-phenyl)amino]-6-(tetrahydropyran-4-yloxy)-7-(2-acetylamino-ethoxy)-chinazolin, 4-[(3-Chlor-4-fluor-phenyl)amino]-6-(tetrahydropyran-4-yloxy)-7-(2-methansulfonylamino-ethoxy)-chinazolin, 4-[(3-Chlor-4-fluor-phenyl)amino]-6-{1-[(piperidin-1-yl)carbonyl]-piperidin-4-yloxy}-7-methoxy-chinazolin, 4-[(3-Chlor-4-fluor-phenyl)amino]-6-(1-aminocarbonyl-methyl-piperidin-4-yloxy)-7-methoxy-chinazolin, 4-[(3-Chlor-4-fluor-phenyl)amino]-6-(cis-4-{N-[(tetrahydropyran-4-yl)carbonyl]-N-methyl-amino}-cyclohexan-1-yloxy)-7-methoxy-chinazolin, 4-[(3-Chlor-4-fluor-phenyl)amino]-6-(cis-4-{N-[(morpholin-4-yl)carbonyl]-N-methyl-amino}-cyclohexan-1-yloxy)-7-methoxy-chinazolin, 4-[(3-Chlor-4-fluor-phenyl)amino]-6-(cis-4-{N-[(morpholin-4-yl)sulfonyl]-N-methyl-amino}-cyclohexan-1-yloxy)-7-methoxy-chinazolin, 4-[(3-Chlor-4-fluor-phenyl)amino]-6-(trans-4-ethansulfonylamino-cyclohexan-1-yloxy)-7-methoxy-chinazolin, 4-[(3-Chlor-4-fluor-phenyl)amino]-6-(1-methansulfonyl-piperidin-4-yloxy)-7-ethoxy-chinazolin, 4-[(3-Chlor-4-fluor-phenyl)amino]-6-(1-methansulfonyl-piperidin-4-yloxy)-7-(2-methoxy-ethoxy)-chinazolin, 4-[(3-Chlor-4-fluor-phenyl)amino]-6-[1-(2-methoxy-acetyl)-piperidin-4-yloxy]-7-(2-methoxy-ethoxy)-chinazolin, 4-[(3-Chlor-4-fluor-phenyl)amino]-6-(cis-4-acetylamino-cyclohexan-1-yloxy)-7-methoxy-chinazolin, 4-[(3-Ethinyl-phenyl)amino]-6-[1-(tert.-butyloxycarbonyl)-piperidin-4-yloxy]-7-methoxy-chinazolin, 4-[(3-Ethinyl-phenyl)amino]-6-(tetrahydropyran-4-yloxy]-7-methoxy-chinazolin, 4-[(3-Chlor-4-fluor-phenyl)amino]-6-(cis-4-{N-[(piperidin-1-yl)carbonyl]-N-methyl-amino}-cyclohexan-1-yloxy)-7-methoxy-chinazolin, 4-[(3-Chlor-4-fluor-phenyl)amino]-6-(cis-4-{N-[(4-methyl-piperazin-1-yl)carbonyl]-N-methyl-amino}-cyclohexan-1-yloxy)-7-methoxy-chinazolin, 4-[(3-Chlor-4-fluor-phenyl)amino]-6-{cis-4-[(morpholin-4-yl)carbonylamino]-cyclohexan-1-yloxy}-7-methoxy-chinazolin, 4-[(3-Chlor-4-fluor-phenyl)amino]-6-{1-[2-(2-oxopyrrolidin-1-yl)ethyl]-piperidin-4-yloxy}-7-methoxy-chinazolin, 4-[(3-Chlor-4-fluor-phenyl)amino]-6-{1-[(morpholin-4-yl)carbonyl]-piperidin-4-yloxy}-7-(2-methoxy-ethoxy)-chinazolin, 4-[(3-Ethinyl-phenyl)amino]-6-(1-acetyl-piperidin-4-yloxy)-7-methoxy-chinazolin, 4-[(3-Ethinyl-phenyl)amino]-6-(1-methyl-piperidin-4-yloxy)-7-methoxy-chinazolin, 4-[(3-Ethinyl-phenyl)amino]-6-(1-methansulfonyl-piperidin-4-yloxy)-7-methoxy-chinazolin, 4-[(3-Chlor-4-fluor-phenyl)amino]-6-(1-methyl-piperidin-4-yloxy)-7(2-methoxy-ethoxy)-chinazolin, 4-[(3-Chlor-4-fluor-phenyl)amino]-6-(1-isopropyloxycarbonyl-piperidin-4-yloxy)-7-methoxy-chinazolin, 4-[(3-Chlor-4-fluor-phenyl)amino]-6-(cis-4-methylamino-cyclohexan-1-yloxy)-7-methoxy-chinazolin, 4-[(3-Chlor-4-fluor-phenyl)amino]-6-{cis-4-[N-(2-methoxy-acetyl)-N-methyl-amino]-cyclohexan-1-yloxy}-7-methoxy-chinazolin, 4-[(3-Ethinyl-phenyl)amino]-6-(piperidin-4-yloxy)-7-methoxy-chinazolin, 4-[(3-Ethinyl-phenyl)amino]-6-[1-(2-methoxy-acetyl)-piperidin-4-yloxy]-7-methoxy-chinazolin, 4-[(3-Ethinyl-phenyl)amino]-6-{1-[(morpholin-4-yl)carbonyl]-piperidin-4-yloxy}-7-methoxy-chinazolin, 4-[(3-Chlor-4-fluor-phenyl)amino]-6-{1-[(cis-2,6-dimethyl-morpholin-4-yl)carbonyl]-piperidin-4-yloxy}-7-methoxy-chinazolin, 4-[(3-Chlor-4-fluor-phenyl)amino]-6-{1-[(2-methyl-morpholin-4-yl)carbonyl]-piperidin-4-yloxy}-7-methoxy-chinazolin, 4-[(3-Chlor-4-fluorphenyl)amino]-6-{1-[(S,S)-(2-oxa-5-aza-bicyclo[2.2.1]hept-5-yl)carbonyl]-piperidin-4-yloxy}-7-methoxy-chinazolin, 4-[(3-Chlor-4-fluor-phenyl)amino]-6-{1-[(N-methyl-N-2-methoxyethyl-amino)carbonyl]-piperidin-4-yloxy}-7-methoxy-chinazolin, 4-[(3-Chlor-4-fluor-phenyl)amino]-6-(1-ethyl-piperidin-4-yloxy)-7-methoxy-chinazolin, 4-[(3-Chlor-4-fluor-phenyl)amino]-6-{1-[(2-methoxyethyl)carbonyl]-piperidin-4-yloxy}-7-methoxy-chinazolin, 4-[(3-Chlor-4-fluor-phenyl)amino]-6-{1-[(3-methoxypropyl-amino)-carbonyl]-piperidin-4-yloxy}-7-methoxy-chinazolin, 4-[(3-Chlor-4-fluor-phenyl)amino]-6-[cis-4-(N-methansulfonyl-N-methyl-amino)-cyclohexan-1-yloxy]-7-methoxy-chinazolin, 4-[(3-Chlor-4-fluor-phenyl)amino]-6-[cis-4-(N-acetyl-N-methyl-amino)-cyclohexan-1-yloxy]-7-methoxy-chinazolin, 4-[(3-Chlor-4-fluor-phenyl)amino]-6-(trans-4-methylamino-cyclohexan-1-yloxy)-7-methoxy-chinazolin, 4-[(3-Chlor-4-fluor-phenyl)amino]-6-[trans-4-(N-methansulfonyl-N-methyl-amino)-cyclohexan-1-yloxy]-7-methoxy-chinazolin, 4-[(3-Chlor-4-fluor-phenyl)amino]-6-(trans-4-dimethylamino-cyclohexan-1-yloxy)-7-methoxy-chinazolin, 4-[(3-Chlor-4-fluor-phenyl)amino]-6-(trans-4-{N-[(morpholin-4-yl)carbonyl]-N-methyl-amino}-cyclohexan-1-yloxy)-7-methoxy-chinazolin, 4-[(3-Chlor-4-fluorphenyl)amino]-6-[2-(2,2-dimethyl-6-oxo-morpholin-4-yl)-ethoxy]-7-[(S)-(tetrahydrofuran-2-yl)methoxy]-chinazolin, 4-[(3-Chlor-4-fluor-phenyl)amino]-6-(1-methansulfonyl-piperidin-4-yloxy)-7-methoxy-chinazolin und 4-[(3-Chlor-4-fluor-phenyl)amino]-6-(1-cyano-piperidin-4-yloxy)-7-methoxy-chinazolin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als Dopamin-Agonisten gelangen hierbei vorzugsweise Verbindungen zur Anwendung, die ausgewählt sind aus der Gruppe bestehend aus Bromocriptin, Cabergolin, Alpha-Dihydroergocryptin, Lisurid, Pergolid, Pramipexol, Roxindol, Ropinirol, Talipexol, Tergurid und Viozan, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als H1-Antihistaminika gelangen hierbei vorzugsweise Verbindungen zur Anwendung, die ausgewählt sind aus der Gruppe bestehend aus Epinastin, Cetirizin, Azelastin, Fexofenadin, Levocabastin, Loratadin, Mizolastin, Ketotifen, Emedastin, Dimetinden, Clemastin, Bamipin, Cexchlorpheniramin, Pheniramin, Doxylamin, Chlorphenoxamin, Dimenhydrinat, Diphenhydramin, Promethazin, Ebastin, Desloratidin und Meclozin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

## Patentansprüche

1. Verfahren zur Überwachung der Füllmasse (2) bei der Befüllung einer Kapsel mit einem pulverförmigen Medikament, in dem, nachdem wenigstens ein Teil der Kapsel mit einer vorgegebenen Füllmasse (2) von vorgegebener geschlossener Kontur aus pulverförmigen Medikament befüllt wurde, in einem Aufzeichnungsschritt wenigstens die im Teil der Kapsel nach der Befüllung befindliche Füllmasse (2) bildgebend, insbesondere digitalbildgebend, aufgezeichnet wird und in einem nachfolgenden Auswertungsschritt anhand des im Aufzeichnungsschritt aufgezeichneten Bildes eine Bewertung der Befüllung hinsichtlich der Füllmasse (2) vorgenommen wird,
**dadurch gekennzeichnet,**
**dass** im Auswertungsschritt im zuvor aufgezeichneten Bild die Kontur der im Teil der Kapsel befindlichen pulverförmigen Füllmasse (2) ermittelt wird und dabei die Umfangslinie der Füllmasse (2) analysiert wird und die ermittelte Konturlinie mit einer vorgegebenen geschlossenen Kontur verglichen wird, wobei eine Inhomogenität der pulverförmigen Füllmasse (2) zu einem Ausbrechen von Bestandteilen der Füllmasse (2) in Form von Bruchstücken führt, so dass eine stark veränderte Konturlinie entsteht, welche leicht und zuverlässig detektiert werden kann und wobei eine mangelhaft befüllte Kapsel von einer korrekt befüllten Kapsel unterschieden wird und wobei eine mangelhaft befüllte Kapsel aussortiert wird.

2. Verfahren zur Überwachung der Füllmasse (2) bei der Befüllung einer Kapsel mit einem Medikament gemäß einem der vorhergehenden Ansprüche, wobei im Aufzeichnungsschritt die bildgebende Aufzeichnung mit sichtbarem Licht erfolgt.

3. Verfahren zur Überwachung der Füllmasse (2) bei der Befüllung einer Kapsel mit einem Medikament gemäß einem der vorhergehenden Ansprüche, wobei im Aufzeichnungsschritt die bildgebende Aufzeichnung durch eine den Teil der Kapsel transmittierende Aufzeichnung erfolgt.

4. Verfahren zur Überwachung der Füllmasse (2) bei der Befüllung einer Kapsel mit einem Medikament gemäß einem der vorhergehenden Ansprüche, wobei im Aufzeichnungsschritt das Innere des Teils der Kapsel vollständig erfasst wird.

5. Verfahren zur Überwachung der Füllmasse (2) bei der Befüllung einer Kapsel mit einem Medikament gemäß einem der vorhergehenden Ansprüche, wobei im Aufzeichnungsschritt die bildgebende Aufzeichnung von oben in das Innere des Teils der Kapsel erfolgt.

6. Verfahren zur Überwachung der Füllmasse (2) bei der Befüllung einer Kapsel mit einem Medikament gemäß einem der vorhergehenden Ansprüche, wobei wenigstens während des Aufzeichnungsschritts der befüllte Teil der Kapsel bewegt wird.

7. Verfahren zur Überwachung der Füllmasse (2) bei der Befüllung einer Kapsel mit einem Medikament gemäß einem der vorhergehenden Ansprüche, wobei im Auswertungsschritt die aufgezeichnete Konturlinie auf konkave Bereiche untersucht wird.

8. Verfahren zur Überwachung der Füllmasse (2) bei der Befüllung einer Kapsel mit einem Medikament gemäß dem vorhergehenden Anspruch, wobei im Auswertungsschritt die aufgezeichnete Konturlinie durch konvexe Anpassung angenähert wird und die Länge der aufgezeichneten Konturlinie mit der Länge der angenäherten Konturlinie verglichen wird.

9. Verfahren zur Überwachung der Füllmasse (2) bei der Befüllung einer Kapsel mit einem Medikament gemäß einem der vorhergehenden Ansprüche, wobei die vorgegebene Kontur durch eine zylinderförmige Füllmasse (2) vorgegeben ist.

10. Verfahren zur Überwachung der Füllmasse (2) bei der Befüllung einer Kapsel mit einem Medikament gemäß einem der vorhergehenden Ansprüche, wobei im Auswertungsschritt eine Kontraststeigerung vorgenommen und / oder die Grau- bzw. Farbabstufungen des Bildes verringert werden.

11. Verfahren zur Überwachung der Füllmasse (2) bei der Befüllung einer Kapsel mit einem Medikament gemäß einem der vorhergehenden Ansprüche, wobei im Auswertungsschritt das Bild in ein binäres Bild umgewandelt wird.

12. Verfahren zur Überwachung der Füllmasse (2) bei der Befüllung einer Kapsel mit einem Medikament gemäß einem der vorhergehenden Ansprüche, wobei im Auswertungsschritt das Bild einer morphologischen Kantenerkennung unterzogen wird, um die Konturlinie zu ermitteln.

13. Verfahren zur maschinellen, fortlaufenden Befüllung von Kapseln mit einem Medikament, wobei jeweils wenigstens ein Teil der Kapsel mit einer vorgegebenen Füllmasse (2) von vorgegebener Kontur aus dem Medikament befüllt wird und im Weiteren eine Überwachung der Füllmasse (2) bei der Befüllung gemäß einem der vorhergehenden Ansprüche 1 - 12 erfolgt und anhand des Ergebnisses der jeweiligen Überwachung gegebenenfalls die Aussortierung der betreffenden Kapsel bzw. des Teils der Kapsel erfolgt.

14. Verfahren zur maschinellen, fortlaufenden Befüllung von Kapseln mit einem Medikament gemäß dem vorhergehenden Anspruch, wobei die Befüllung ein Aufschlagen der Füllmasse (2) auf wenigstens einen Teil der Kapsel aufweist.

15. Verfahren zur maschinellen, fortlaufenden Befüllung von Kapseln mit einem Medikament gemäß einem der beiden vorhergehenden Ansprüche, wobei das die Füllmasse (2) bildende Medikament pulverförmig ist.

16. Verfahren zur maschinellen, fortlaufenden Befüllung von Kapseln mit einem Medikament gemäß einer der vorhergehenden Ansprüche 13 bis 15, wobei die Befüllung nach dem Stechheberprinzip erfolgt.

17. Verfahren zur Überwachung der Füllmasse (2) bei der Befüllung einer Kapsel mit einem Medikament gemäß einem der Ansprüche 1 bis 12, wobei im Aufzeichnungsschritt mit Hilfe einer CCD-Kamera (4) und einer zugehörigen Optik (3, 5) von oben in den offenen Teil der Kapsel hinein ein Bild aufgezeichnet wird und das Bild zur Auswertung weitergeleitet wird.

18. Verfahren zur Überwachung der Füllmasse (2) bei der Befüllung einer Kapsel mit einem Medikament gemäß einem der Ansprüche 1 bis 12 oder 17, wobei im Aufzeichnungsschritt der Teil der Kapsel unter Verwendung einer LED (6) oder eines Laser durchleuchtet wird.

## Claims

1. Process for monitoring the fill mass (2) when filling a capsule with a powdered medicament in which, after at least part of the capsule has been filled with a given fill mass (2) of a given closed contour from the powdered medicament, in a recording step at least the fill mass (2) contained in the capsule part after filling is recorded as an image, particularly a digital image, and in a subsequent evaluation step an assessment of the filling with respect to the fill mass (2) is carried out using the image recorded in the recording step,
**characterised in that**
in the evaluation step, in the image recorded previously, the contour of the powdered fill mass (2) contained in the capsule part is determined and the outline of the fill mass (2) is analysed in the process, and the determined contour line is compared with a given closed contour, an inhomogeneity of the powdered fill mass (2) leading to the break-up of ingredients of the fill mass (2) in the form of fragments such that a significantly altered contour line is formed, which fragments can be easily and reliably detected, and a defectively filled capsule differing from a correctly filled capsule and a defectively filled capsule being rejected.

2. Process for monitoring the fill mass (2) when filling a capsule with a medicament according to one of the preceding claims, wherein in the recording step the imaging recording is carried out using visible light.

3. Process for monitoring the fill mass (2) when filling a capsule with a medicament according to one of the preceding claims, wherein in the recording step the imaging recording is carried out by means of a recording that penetrates the capsule part.

4. Process for monitoring the fill mass (2) when filling a capsule with a medicament according to one of the preceding claims, wherein in the recording step the interior of the capsule part is captured in its entirety.

5. Process for monitoring the fill mass (2) when filling a capsule with a medicament according to one of the preceding claims, wherein in the recording step the imaging recording is carried out from above into the interior of the capsule part.

6. Process for monitoring the fill mass (2) when filling a capsule with a medicament according to one of the preceding claims, wherein the filled part of the capsule is moved at least during the recording step.

7. Process for monitoring the fill mass (2) when filling a capsule with a medicament according to one of the preceding claims, wherein in the evaluation step the contour line recorded is examined for concave areas.

8. Process for monitoring the fill mass (2) when filling a capsule with a medicament according to the preceding claim, wherein in the evaluation step the contour line recorded is approximated by convex matching and the length of the contour line recorded is compared with the length of the approximated contour line.

9. Process for monitoring the fill mass (2) when filling a capsule with a medicament according to one of the preceding claims, wherein the given contour is predetermined by a cylindrical fill mass (2).

10. Process for monitoring the fill mass (2) when filling a capsule with a medicament according to one of the preceding claims, wherein in the evaluation step the contrast is increased and/or the grey or colour gradations of the image are reduced.

11. Process for monitoring the fill mass (2) when filling a capsule with a medicament according to one of the preceding claims, wherein in the evaluation step the image is converted into a binary image.

12. Process for monitoring the fill mass (2) when filling a capsule with a medicament according to one of the preceding claims, wherein in the evaluation step the image is subjected to morphological edge recognition in order to establish the contour line.

13. Process for the continuous mechanical filling of capsules with a medicament, wherein in each case at least part of the capsule is filled with a specified fill mass (2) of a given contour from the medicament and moreover the fill mass (2) is monitored during the filling process according to one of the preceding claims 1 - 12 and using the results of the respective monitoring the capsule or capsule part in question is rejected if necessary.

14. Process for the continuous mechanical filling of capsules with a medicament according to the preceding claim, wherein the filling comprises knocking the fill mass (2) onto at least a part of the capsule.

15. Process for the continuous mechanical filling of capsules with a medicament according to one of the two preceding claims, wherein the medicament that forms the fill mass (2) is in powder form.

16. Process for the continuous mechanical filling of capsules with a medicament according to one of the preceding claims 13 to 15, wherein the filling is carried out using the pipette technique.

17. Process for monitoring the fill mass (2) when filling a capsule with a medicament according to one of claims 1 to 12, wherein in the recording step an image is recorded from above into the open capsule part using a CCD camera (4) and associated optical means (3, 5) and the image is passed on for evaluation.

18. Process for monitoring the fill mass (2) when filling a capsule with a medicament according to one of claims 1 to 12 or 17, wherein in the recording step the capsule part is illuminated using an LED (6) or a laser.

## Revendications

1. Procédé de surveillance de la masse de remplissage (2) lors du remplissage d'une capsule avec un médicament pulvérulent, dans lequel, après qu'au moins une partie de la capsule a été remplie de médicament pulvérulent avec une masse de remplissage (2) prédéterminée ayant un contour fermé prédéterminé de médicament pulvérulent, dans une étape d'enregistrement, au moins la masse de remplissage (2) se trouvant dans la partie de la capsule après le remplissage est enregistrée de façon à donner une image, en particulier une image numérique et dans une étape d'évaluation consécutive, sur la base de l'image enregistrée à l'étape d'enregistrement, une évaluation du remplissage relatif à la masse de remplissage (2) est réalisée,
**caractérisé en ce que**,
à l'étape d'évaluation, sur l'image enregistrée précédemment, le contour de la masse de remplissage (2) pulvérulente se trouvant dans la partie de la capsule est déterminé et ce faisant, le pourtour de la masse de remplissage (2) est analysé et la ligne de contour déterminée est comparée à un contour fermé prédéterminé, dans lequel une inhomogénéité de la masse de remplissage (2) pulvérulente entraîne un éclatement des composants de la masse de remplissage (2) sous la forme de fragments, de sorte qu'il se forme une ligne de contour fortement modifiée qui peut être détectée facilement et de façon fiable et dans lequel une capsule remplie de façon défectueuse est distinguée d'une capsule remplie correctement et dans lequel une capsule remplie de façon défectueuse est éliminée.

2. Procédé de surveillance de la masse de remplissage (2) lors du remplissage d'une capsule avec un médicament selon l'une des revendications précédentes, dans lequel à l'étape d'enregistrement, l'enregistrement formant une image s'effectue avec une lumière visible.

3. Procédé de surveillance de la masse de remplissage (2) lors du remplissage d'une capsule avec un médicament selon l'une des revendications précédentes, dans lequel à l'étape d'enregistrement, l'enregistrement formant une image s'effectue par un enregistrement transmissif de la partie de la capsule.

4. Procédé de surveillance de la masse de remplissage (2) lors du remplissage d'une capsule avec un médicament selon l'une des revendications précédentes, dans lequel à l'étape d'enregistrement, l'intérieur de la partie de la capsule est détecté complètement.

5. Procédé de surveillance de la masse de remplissage (2) lors du remplissage d'une capsule avec un médicament selon l'une des revendications précédentes, dans lequel à l'étape d'enregistrement, l'enregistrement formant une image s'effectue du dessus dans l'intérieur de la partie de la capsule.

6. Procédé de surveillance de la masse de remplissage (2) lors du remplissage d'une capsule avec un médicament selon l'une des revendications précédentes, dans lequel au moins pendant l'étape d'enregistrement, la partie remplie de la capsule est en mouvement.

7. Procédé de surveillance de la masse de remplissage (2) lors du remplissage d'une capsule avec un médicament selon l'une des revendications précédentes, dans lequel à l'étape d'évaluation, la ligne de contour enregistrée est examinée sur des zones concaves.

8. Procédé de surveillance de la masse de remplissage (2) lors du remplissage d'une capsule avec un médicament selon la revendication précédente, dans lequel à l'étape d'évaluation s'effectue une approximation de la ligne de contour enregistrée par ajustement convexe et la longueur de la ligne de contour enregistrée est comparée à la longueur de la ligne de contour définie par approximation.

9. Procédé de surveillance de la masse de remplissage (2) lors du remplissage d'une capsule avec un médicament selon l'une des revendications précédentes, dans lequel le contour prédéterminé est prédéterminé par une masse de remplissage (2) de forme cylindrique.

10. Procédé de surveillance de la masse de remplissage (2) lors du remplissage d'une capsule avec un médicament selon l'une des revendications précédentes, dans lequel à l'étape d'évaluation est réalisée une augmentation du contraste et/ou les niveaux de gris ou les nuances de couleur de l'image sont réduits.

11. Procédé de surveillance de la masse de remplissage (2) lors du remplissage d'une capsule avec un médicament selon l'une des revendications précédentes, dans lequel à l'étape d'évaluation, l'image est convertie en une image binaire.

12. Procédé de surveillance de la masse de remplissage (2) lors du remplissage d'une capsule avec un médicament selon l'une des revendications précédentes, dans lequel à l'étape d'évaluation, l'image est soumise à une détection morphologique des bordures pour déterminer la ligne de contour.

13. Procédé de remplissage mécanique continu de capsules avec un médicament, dans lequel respectivement au moins une partie de la capsule est remplie de médicament avec une masse de remplissage (2) prédéterminée de contour prédéterminé du médicament et par la suite, une surveillance de la masse de remplissage (2) s'effectue lors du remplissage selon l'une des revendications 1 à 12 précédentes et sur la base du résultat de la surveillance respective, s'effectue éventuellement l'élimination de la capsule ou de la partie de la capsule concernée.

14. Procédé de remplissage mécanique continu de capsules avec un médicament selon la revendication précédente, dans lequel le remplissage présente un tassage de la masse de remplissage (2) sur au moins une partie de la capsule.

15. Procédé de remplissage mécanique continu de capsules avec un médicament selon l'une des deux revendications précédentes, dans lequel le médicament formant la masse de remplissage (2) est sous forme pulvérulente.

16. Procédé de remplissage mécanique continu de capsules avec un médicament selon l'une des revendications 13 à 15 précédentes, dans lequel le remplissage s'effectue selon le principe de la pipette.

17. Procédé de surveillance de la masse de remplissage (2) lors du remplissage d'une capsule avec un médicament selon l'une des revendications 1 à 12, dans lequel à l'étape d'enregistrement à l'aide d'une caméra CCD (4) et d'une optique (3, 5) correspondante, une image du dessus vers l'intérieur de la partie ouverte de la capsule est enregistrée et l'image est transmise pour être évaluée.

18. Procédé de surveillance de la masse de remplissage (2) lors du remplissage d'une capsule avec un médicament selon l'une des revendications 1 à 12 ou 17, dans lequel à l'étape d'enregistrement, la partie de la capsule est inspectée en utilisant une LED (6) ou un laser.
